Europäisches Patentamt
European Patent Office
Office européen des brevets

(11) Veröffentlichungsnummer: **0 200 906**
**A2**

# EUROPÄISCHE PATENTANMELDUNG

(21) Anmeldenummer: 86104177.0

(22) Anmeldetag: 26.03.86

(51) Int. Cl.4: C08G 12/30 , C08G 12/32 , C07D 251/70 , C08J 5/24

(30) Priorität: 04.04.85 DE 3512446

(43) Veröffentlichungstag der Anmeldung: 17.12.86 Patentblatt 86/46

(84) Benannte Vertragsstaaten: AT BE CH DE FR IT LI NL SE

(71) Anmelder: CASSELLA Aktiengesellschaft
Hanauer Landstrasse 526
D-6000 Frankfurt am Main 61(DE)

(72) Erfinder: Piesch, Steffen, Dr.
An der Heide 32
D-6370 Oberursel(DE)
Erfinder: Wolf, Alfons
Einhardstrasse 34
D-6453 Seligenstadt(DE)
Erfinder: Sinsel, Susanne
Orber Strasse 14
D-6485 Jossgrund-Pfaffenhausen(DE)

(74) Vertreter: Urbach, Hans-Georg, Dr. et al
Hanauer Landstrasse 526
D-6000 Frankfurt am Main 61(DE)

## (54) Modifiziertes Melaminharz, seine Herstellung und seine Verwendung sowie das Modifizierungsmittel.

(57) Modifiziertes Melaminharz, bestehend aus einem praktisch unveretherten Melamin/Formaldehyd-Vorkondensat, Wasser und gegebenenfalls einem wassermischbaren niederen Alkanol und gegebenenfalls in wäßrigen Melaminharzen üblichen Modifizierungsmitteln, mit einem Molverhältnis von Melamin:Formaldehyd von 1:1,05 bis 1:1,27 und einer Wasserverdünnbarkeit von 1:3 bis 1:0,05 als Modifizierungsmittel 0,3 bis 6,5 Gew.% Hydroxyethylaminotriazine der Formel 1

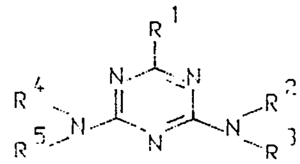

(I)

worin

R' Alkyl, Aryl oder eine Gruppe der Formel

EP 0 200 906 A2

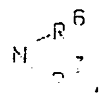

$R^2$, $R^4$ und $R^6$ unabhängig voneinander Wasserstoff, $\beta$-Hydroxyethyl oder Alkyl,

$R^3$ und $R^7$ unabhängig voneinander Wasserstoff oder $\beta$-Hydroxyethyl,

$R^5$ $\beta$-Hydroxyethyl bedeuten oder

$R^2$ und $R^3$ und/oder $R^4$ und $R^5$ und/oder $R^6$ und $R^7$ gemeinsam die zweiwertige Gruppe der Formel

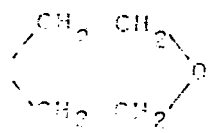

bilden, oder deren statistische Gemische in einkondensierter Form oder in Form seines Vorkondensats mit Formaldehyd im Molverhältnis von 1:1,05 bis 1:1,27 enthält.

Modifiziertes Melaminharz, seine Herstellung und seine Verwendung sowie das Modifizierungsmittel

Die vorliegende Erfindung betrifft modifizierte, praktisch unveretherte Melaminharze mit nierdrigem Molverhältnis von Melamin/Formaldehyd und begrenzter Wasserverdünnbarkeit, die als Modifizierungsmittel Hydroxyethylaminotriazine enthalten.

Die Erfindung betrifft auch die Herstellung dieser modifizierten Melaminharze und ihre Verwendung zur Herstellung von dekorativ oder schützend beschichteten Laminaten und von härtbaren Formmassen sowie das Modifizierungsmittel und seine Herstellung.

Melaminharze werden durch Umsetzung von Melamin und Formaldehyd hergestellt. Sie finden wegen ihrer Eigenschaft, irreversibel auszuhärten, breite technische Anwendung zum Beispiel zur Herstellung von härtbaren Formmassen, dekorativen Schichtstoffen, Textilveredelungsmitteln, Lacken und Leimen.

Aus härtbaren Formmassen werden durch Einwirkung mechanischer Kräfte innerhalb eines bestimmten Temperaturbereichs Formteile der verschiedensten Art, wie z.B. Küchengeschirr, Tabletts, Telefon-, Radio-, Uhren-und Fernsehgehäuse, Knöpfe, Armaturen, elektrische Isolierteile und ähnliches hergestellt. Bei der Herstellung von größeren Formteilen müssen geringe Werte für Verarbeitungsschwindung und Nachschwindung eingehalten werden, um eine einwandfreie Verarbeitung der Formteile zu ermöglichen und ein späteres Reißen der Formteile zu verhindern. Derartige Forderungen werden z.B. von Phenolharzformmassen, vor allem aber von Polyesterharz-und Epoxidharzformmassen erfüllt. Zum Teil sind die zu ihrer Herstellung erforderlichen Harze teuer, und die daraus hergestellten Formteile besitzen zum Teil noch unerwünschte thermo plastische Eigenschaften oder sind nicht ausreichend lösungsmittel-oder hitzebeständig. Formteile, die in der Elektroindustrie verwendet werden, wie z.B. Schalter, Knöpfe, Sicherungshalter, Chassisteile, Fassungen für Transistoren, integrierte Schaltkreise und dergleichen, müssen darüber hinaus in ausreichendem Maße kriechstromfest sein.

Formmassen, die auf der Basis von üblichen Melaminharzen hergestellt worden sind, zeigen bei der Aushärtung größere Nachschwindungswerte als zum Beispiel Formmassen auf der Basis von Phenolharzen und vor allem von Polyester-oder Epoxidharzen. Zur Herstellung von Formmassen bzw. Formteilen konnten übliche Melaminharze daher lange Zeit nur dann verwendet werden, wenn die einzuhaltenden Toleranzen groß waren und die Erwärmung gering war. Es war zwar bekannt, daß durch Verwendung hoher Anteile spezieller anorganischer Füllmittel, zum Beispiel Aluminiumoxidhydrat (vergl. DE-OS 23 56 298), Gesteinsmehl etc., die Nachswindung bei der Herstellung der Formmassen verringert werden kann, jedoch müssen dabei meist schlechtere Fließeigenschaften bei der Verarbeitung der Formmassen in Kauf genommen werden.

Laminate, die unter Einsatz der erfindungsgemäßen Harze mit besonderem Vorteil hergestellt werden können, sind z.B. oberflächenveredelte Holzwerkstoffe oder Schichtstoffe.

Bei der Oberflächenveredelung von Holzwerkstoffen wird auf Holzfaser-oder Holzspanplatten eine Dekor-bzw. Schutzschicht dadurch aufgebracht, daß dekorative Papier-bzw. Gewebebahnen mit wäßrigen Lösungen geeigneter Aminoplastharze, vorzugsweise Melaminharze, getränkt, auf einen bestimmten Restfeuchtegehalt getrocknet und auf die Platten des Holzwerkstoffs durch Thermohärtung auflaminiert werden. Der Preßdruck kann dabei etwa 10 bis 100 bar und die Temperatur etwa 120 bis 180°C betragen. Während des Preßvorgangs härtet der Aminoplast aus und verbindet die Papier-bzw. Gewebebahn mit der Platte des Holzwerkstoffs.

In ähnlicher Weise lassen sich Schichtstoffe mit dekorativer bzw. schützender Oberfläche herstellen. Hierbei wird die aminoplastharzgetränkte Dekorbahn nach dem Trocknen auf mehrere Lagen phenolharzimprägnierter Kraftpapiere durch Thermohärtung bei 120 bis 180°C mit einem Druck von 50 -150 bar aufgepreßt.

Zur Herstellung solcher Laminate werden Melaminharze benötigt, die beim und nach dem Aushärten keine Vergilbung zeigen, hochglänzende geschlossene Oberflächen ohne Glanzfleckigkeit ergeben, eine kurze Härtungsdauer bei hoher Elastizitätsreserve und Härtertoleranz haben. Dabei soll die erhaltene Oberfläche eine geringe Nachschwindung und möglichst hohe Schlagzähigkeit zeigen.

Aus den DE-OS 26 03 767 und 26 03 768 sind elektrolytfreie Melaminharze bekannt, aus denen Formteile mit hohem elektrischen Widerstand und hoher elektrischer Kriechstromfestigkeit hergestellt werden können. Die Verarbeitungs-und Nachschwindung der mit diesen bekannten Melaminharzen hergestellten Formmassen ist jedoch für die Herstellung größerer Formteile noch zu groß.

Aus der DE-OS 28 24 473 sind teilveretherte, flüssige Melaminharze mit einem Molverhältnis Melamin : Formaldehyd = 1 : (1,25 bis 1,0) bekannt, aus denen Formmassen hergestellt werden können, die nur noch eine minimale Nachschwindung zeigen. Diese bekannten flüssigen Harze enthalten von ihrer Herstellung her jedoch noch Anteile von hochsiedenden Glykolethern und können daher nicht in Pulverharze überführt werden, die bei der Herstellung von Formmassen bevorzugt werden. Außerdem hat sich gezeigt, daß die aus diesen Formmassen hergestellten Formteile für manche Zwecke ein ungenügendes Brandverhalten besitzen.

Aus der DE-OS 31 04 420 sind Melaminharze mit niedrigem Molverhältnis von Melamin:Formaldehyd (1:1,27 bis 1:0,7) und begrenzter Wasserverdünnbarkeit bekannt, die vielen der an moderne Preßmassenharze gestellten Anforderungen bereits weitgehend gerecht werden, die insbesondere einen sehr geringen Nachschwund aufweisen. Eine gewisse Neigung zur Glanzfleckigkeit der Oberfläche bereitet jedoch Probleme bei der Preßteilherstellung und setzt der Einsatzmöglichkeit dieser Harze insbesondere zur Herstellung von dekorativ beschichteten Laminaten Grenzen. Hinzu kommen noch gewisse Schwächen der aus diesen Harzen hergestellten Preßteile unter extremen Belastungen, wie z.B. Wasserlagerung, starker Wechsel von Temperaturen und Feuchtigkeit und relativ hohe Anforderungen an die Konstanz der Verarbeitungsbedingungen.

Aus der Europäischen Patentanmeldung Nr. 106 049 sind Harzgemische bekannt aus a) Hydroxyalkylmelamin oder b) einem Reaktionsprodukt eines Hydroxyalkylmelamins mit Formaldehyd und c) einem Melamin/Formaldehyd-Vorkondensat, wobei das Gewichtsverhältnis von a:c 1:1 bis 1:20 bzw. das von b:c 20:1 bis 1:20 beträgt. Das Molverhältnis von Hydroxyalkylmelamin:Formaldehyd in b) beträgt 1:0,05 bis 1:3 und das des Melamin/Formaldehyd-Vorkondensats beträgt 1:1 bis 1:3.

Das Hydroxyalkylmelamin (Komponente a) bzw. dessen Reaktionsprodukt mit Formaldehyd (Komponente b) wird dem fertigen Melamin/Formaldehyd-Vorkondensat zugesetzt; eine gemeinsame Kondensation von Hydroxyalkylamin bzw. dessen Methylolierungsprodukt und von Melamin mit Formaldehyd findet nicht statt. Das dabei eingesetzte Hydroxyalkylmelamin entspricht der Formel

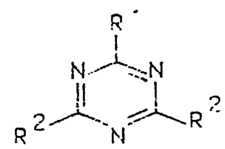

worin $R^1$ eine $C_1$ bis $C_8$-Alkylgruppe oder eine $C_6$ bis $C_{10}$-Arylgruppe oder $R^2$,

$R^2$ eine der Gruppen $-NH_2$, $-NH(CH_2)_xOH$ oder

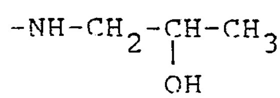 und

x eine Zahl von 3 bis 8 bedeutet und mindestens ein $R^2$ eine Hydroxyalkylgruppe ist.

Diese Harzgemische können zur Herstellung von Laminaten mit guten post-forming Eigenschaften und hoher Wasserfestigkeit eingesetzt werden. Insbesondere auf dem Preßmassensektor lassen sie aber noch anwendungstechnische Wünsche offen.

Es wurde nun gefunden, daß man Preßstücke und Laminate mit sehr geringem Nachschwund erhält, die eine schleierfreie Oberfläche mit besonders erhöhter Schlagzähigkeit und hoher Rißbeständigkeit und Elastizität aufweisen, wenn man zur Herstellung dieser Produkte ein modifiziertes Melaminharz einsetzt, das aus einem praktisch unveretherten Melamin/Formaldehyd-Vorkondensat, Wasser und gegebenenfalls einem wassermischbaren niederen Alkanol und gegebenenfalls in wäßrigen Melaminharzen üblichen Modifizierungsmitteln besteht und dessen Melamin/Formaldehyd-Vorkondensat ein Molverhältnis von Melamin:Formaldehyd von 1:1,05 bis 1:1,27 und eine Wasserverdünnbarkeit von 1:3 bis 1:0,05 aufweist und das als Modifizierungsmittel 0,3 bis 6,5 Gew.% Hydroxyethylaminotriazine der Formel I

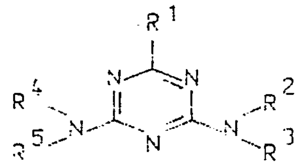

(I)

worin

$R^1$ Alkyl mit 1 bis 4 C-Atomen, Aryl mit 6 bis 10 C-Atomen oder eine Gruppe der Formel

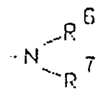

,

$R^2$, $R^4$ und $R^6$ unabhängig voneinander Wasserstoff, $\beta$-Hydroxyethyl oder Alkyl mit 1 bis 4 C-Atomen,

$R^3$ and $R^7$ unabhängig voneinander Wasserstoff oder $\beta$-Hydroxyethyl,

$R^5$ $\beta$-Hydroxyethyl bedeuten oder

$R^2$ und $R^3$ und/oder $R^4$ und $R^5$ und/oder $R^6$ und $R^7$ gemeinsam die zweiwertige Gruppe der Formel

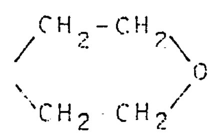

bilden,

oder deren statistische Gemische in einkondensierter Form oder in Form seines Vorkondensats mit Formaldehyd im Molverhältnis von 1:1,05 bis 1:1,27 enthält.

Die erfindungsgemäßen Harze haben auch eine gegenüber herkömmlichen Harzen deutlich erhöhte Verarbeitungssicherheit, insbesondere zeigen sie aufgrund ihrer besonders hohen Elastizitätsreserve eine sehr gute Härtertoleranz, und es gelingt mit Ihnen auch bei schneller Aushärtung, d.h. kurzen Peßzyklen, hochelastische Oberflächen zu erzielen.

Die erfindungsgemäßen Harze sind praktisch unverethert. Bei der Kondensation von Melamin und Formaldehyd ist es häufig zweckmäßig, nicht in reinem Wasser zu arbeiten sondern dem flüssigen Medium bis zu 10 Gew.% niedere mit Wasser mischbare Alkanole zuzusetzen. Außerdem können hydroxylgruppenhaltige Substanzen als Modifizierungsmittel in den Harzansätzen während der Kondensation anwesend sein. Theoretisch ist durch die Gegenwart dieser alkoholischen Verbindungen eine Teilveretherung der Melamin-Formaledehyd-Vorkondensate denkbar, die aber in der Praxis stets weit unter einem % bleibt. Solche Harze sollen im Sinne der vorliegenden Erfindung als praktisch unveretherete Melaminharze bezeichnet werden.

Bevorzugte erfindungsgemäße Melaminharze sind solche, deren Melamin/Formaldehyd-Verkondensat ein Molverhältnis von 1:1,15 bis 1:1,25 aufweist, ferner solche, die das Modifizierungsmittel auf Basis der Hydroxyethylaminotriazine in einer Menge von 2 bis 4,5 Gew.%, bezogen auf Festkörper des Harzes, enthalten.

Bevorzugte erfindungsgemäße Melaminharze werden auch erhalten, wenn ihnen als Modifizierungsmittel eine Verbindung oder ein statistisches Gemisch von Verbindungen der Formel I zugesetzt wurde, worin

$R^1$ Methyl, Phenyl, insbesondere aber eine Gruppe der Formel

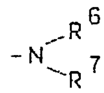
,

ist, oder worin

$R^2$, $R^4$ und $R^6$ unabhängig voneinander β-Hydroxyethyl oder insbesondere Wasserstoff,

$R^3$ und $R^7$ unabhängig voneinander Wasserstoff oder β-Hydroxyethyl,

$R^5$ β-Hydroxyethyl bedeuten oder

$R^2$ und $R^3$ und/oder $R^4$ und $R^5$ und/oder $R^6$ und $R^7$ gemeinsam die zweiwertige Gruppe der Formel

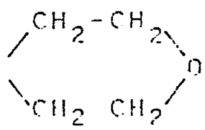

bilden.

Sowohl wegen der hohen Qualität der damit zu erhaltenden Endprodukte als auch wegen der besonderen Vorteile bei der Herstellung sind auch solche erfindungsgemäßen modifizierten Melaminharze bevorzugt, die als Modifizierungsmittel ein statistisches Gemisch der Hydroxyethylaminotriazine der Formel I enthalten. Die Bezeichnung "statistisches Gemisch" soll klarstellen, daß auch dann, wenn die Anzahl von Hydroxyethylgruppen pro Mol des Aminotriazins nach der Analyse ganzzahlig ist, durchaus ein Gemisch von Aminotriazinen der Formel I vorliegen kann, dessen Komponenten unterschiedliche Hydroxyethylgruppengehalte aufweisen. Die analytischen Angaben für das Modifizierungsmittel sollen somit in jedem Falle statistisch interpretiert werden.

Ein weiteres bevorzugtes Merkmal der erfindungsgemäßen modifizierten Melaminharze ist, daß sie praktisch frei sind von Anionen anorganischer, insbesondere starker anorganischer Säuren. Anionen starker anorganischer Säuren können zu mancherlei Schwierigkeiten bei der Verwendung von Melaminharzen führen. Insbesondere können z.B. Chlorionen zu Schäden an den Pressen und zu Qualitätsverminderungen der erhaltenen Preßgegenstände führen, Sulfat-und Phosphationen bilden schwerlösliche Kalziumsalze, die häufig zur Bildung von Belägen auf den Preßblechen und zu Schleierbildung führen. Anionen anorganischer Säuren, insbesondere starker anorganischer Säuren, können leicht in Melaminharze gelangen, wenn Modifizierungsmittel eingesetzt werden, die derartige Ionen enthalten. Es ist daher von besonderer Bedeutung, als erfindungsgemäß einzusetzendes Modifizierungsmittel auf Basis von Hydroxyethylaminotriazinen der Formel I solche Produkte einzusetzen, die von vornherein praktisch frei sind von derartigen störenden Anionen. Praktisch frei von solchen Anionen sind solche Produkte, denen nicht absichtlich anorganische Säuren, insbesondere starke anorganische Säuren, zugesetzt worden sind. Spuren von Anionen anorga nischer Säuren, wie sie beispielsweise in normalem Trinkwasser stets vorkommen, sind hierbei außer acht zu lassen. Besonders bevorzugt sind daher solche erfindungsgemäßen modifizierten Melaminharze, die als erfindungsgemäßes Modifizierungsmittel ein statistisches Gemisch der Hydroxyethylaminotriazine der Formel I enthalten, wie es gemäß dem weiter unten beschriebenen Herstellungsverfahren für solche Gemische zu erhalten ist. Eine weitere bevorzugte Gruppe erfindungsgemäßer modifizierter Melaminharze enthält als erfindungsgemäß einzusetzendes Modifizierungsmittel ein statistisches Gemisch der Hydroxyethylaminotriazine der Formel I mit einem analytischen Mittelwert von 1 bis 4, vorzugsweise 1,5 bis 2,5, Hydroxyethylgruppen pro Mol Aminotriazin.

Besonders bevorzugt sind solche erfindungsgemäßen, modifizierten Melaminharze, deren erfindungsgemäßes Modifizierungsmittel im statistischen Mittel 1,8 bis 2,2 Hydroxyethylgruppen enthalten und dabei einen Gehalt von mindestens 50 Gew% Bis-hydroxyethylmelamin aufweisen.

Sofern Hydroxyethylaminotriazine der Formel I oder statistische Gemische dieser Verbindungen als erfindungsgemäßes Modifizierungsmittel eingesetzt werden, ist es zweckmäßig, diese Verbindungen bereits vor der Kondensation den Melaminharzansätzen zuzufügen. Bei diesem Vorgehen werden nämlich die Modifizierungsmittel in das Harz

fest eingebaut. Sie ergeben in diesem Fall besonders gute und dauerhafte Effekte. Werden als Modifizierungsmittel Vorkondensate der Hydroxyethylaminotriazine der Formel I oder deren statistischer Gemische mit Formaldehyd als Modifizierungsmittel eingesetzt, so ist der Effekt eines vor der Harzkondensation erfolgenden Zusatzes des Modifizierungsmittels nicht so drastisch, da diese Vorkondensate bereits selbst relativ hochmolekular sind und dadurch recht dauerhafte Effekte liefern. Dennoch kann auch in diesem Fall ein Zusatz vor Beginn der Harzkondensation empfohlen werden.

Besonders wertvolle erfindungsgemäße Harze sind auch solche, die neben dem erfindungsgemäßen, einkondensierten Hydroxyethylmelamin noch bis zu 8 Gew.%, vorzugsweise 1,5 bis 5 Gew.%, berechnet auf Gesamtfestkörper des Harzes von Glycolethern bzw. deren technischen Mischungen der Formel

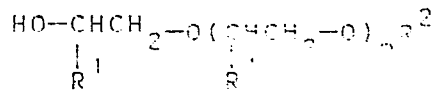

enthalten, wobei

$R^1$ Wasserstoff oder Alkyl mit 1 bis 3 C-Atomen, vorzugsweise Wasserstoff oder Propyl,

$R^2$ Wasserstoff oder Alkyl mit 1 bis 4 C-Atomen, vorzugsweise Wasserstoff,

n eine Zahl von 1 bis 6 und, soweit der Anteil der entsprechenden Komponente 5, vorzugsweise 2, Gew.% des Gesamtfestkörpers des Harzes nicht überschreitet, auch eine Zahl von 6 bis 30 bedeutet.

Die Herstellung der erfindungsgemäßen modifizierten Melaminharze erfolgt durch Kondensation von Melamin mit Formaldehyd in einem flüssigen Medium aus Wasser und gegebenenfalls bis zu 10 Gew.% eines wassermischbaren niederen Alkanols und gegebenenfalls in Gegenwart von in wäßrigen Melaminharzen üblichen Modifizierungsmitteln bei einem pH-Wert >8. Melamin und Formaldehyd werden dabei im Molverhältnis von 1:1,05 bis 1:1,27 eingesetzt, die Kondensation wird bis zu einer Wasserverdünnbarkeit von 1:3 bis 1:0,05 geführt, und vor oder während der Kondensation werden 0,3 bis 6,5 Gew.%, bezogen auf die Gewichtssumme von Melamin und Formaldehyd eines Hydroxyethylaminotriazins der Formel I des Anspruchs 1 oder eines statistischen Gemisches dieser Hydroxyethylaminotriazine, oder vor, während oder nach der Kondensation werden 0,3 bis 6,5 Gew.% eines Vorkondensats von Hydroxyethylaminotria zinen der Formel I oder eines statistischen Gemisches derselben mit Formaldehyd im Molverhältnis 1:1,05 bis 1:1,27 zugefügt.

Vorzugsweise wird ein statistisches Gemisch von Hydroxyethylaminotriazinen der Formel I zugesetzt und zwar insbesondere bereits vor Beginn der Kondensation von Melamin und Formaldehyd.

Die Kondensationsreaktion wird bei einem pH-Wert von 8 bis 11, vorzugsweise 8,5 bis 10,5, und bei Temperaturen von 100 bis 160°C, vorzugsweise 105 bis 130°C, so lange fortgesetzt, bis die gewünschte Wasserverdünnbarkeit von 1 : (0,05 bis 3), vorzugsweise 1 : (0,1 bis 1,5), erreicht worden ist. Es hat sich als besonders vorteilhaft erwiesen, die Kondensationsreaktion nicht bis zu gewünschten Wasserverdünnbarkeit bei ein und derselben Temperatur durchzuführen, sondern in zwei unterschiedlichen Temperaturbereichen zu arbeiten. Bei dieser Arbeitsweise wird der Ansatz zu Beginn der Reaktion auf die oben angegebene Temperatur von 100 bis 160°C, vorzugsweise 105 bis 130°C, erwärmt und dabei so lange gehalten, bis das Melamin vollständig gelöst ist. Dann wird sofort auf eine Temperatur von 75 bis 100°C, vorzugsweise von 85 bis 95°C, abgekühlt und bei dieser Temperatur bis zur gewünschten Wasserverdünnbarkeit weiterkondensiert. Das erhaltene flüssige Harz kann gegebenenfalls anschließend in an sich bekannter Weise in ein Pulverharz überführt werden.

Da die Anfangsreaktionstemperaturen in der Regel über dem Siedepunkt des Wassers liegen, wird die Herstellung der erfindungsgemäßen Harze in einem geschlossenen Druckgefäß (Autoklav) unter dem sich bei der Kondensation einstellenden Überdruck, zweckmäßigerweise unter Rühren, vorgenommen. Der Formaldehyd wird normalerweise in Form der üblichen 39%igen wäßrigen Lösung eingesetzt. Aber auch wäßrige Lösungen von Paraformaldehyd oder höher-oder niedriger-konzentrierte Formaldehydlösungen können eingesetzt

werden. Die Konzentration des Formaldehyds in der wäßrigen Lösung des Reaktionsansatzes kann 10 bis 60 Gew.%, vorzugsweise 20 bis 40 Gew.%, betragen.

Bei den angegebenen Reaktionsbedingungen tritt auch ohne Zusatz von Modifizierungsmitteln eine verhältnismäßig rasche Auflösung des Melamins und des erfindungsgemäßen Modifizierungsmittels ein. Zum Beispiel ist bei 20 bis 25 molaren Ansätzen das Melamin schon nach 5 bis 10 Minuten aufgelöst. Nach der Auflösung des Melamins nimmt bei weiterer Kondensation die Wasserverdünnbarkeit des Ansatzes ab. Es wird normalerweise so lange weiterkondensiert, bis die fertige Harzlösung die oben angegebene Wasserverdünnbarkeit erreicht hat. Bei der Bestimmung der Wasserverdünnbarkeit wird bekanntlich ein abgemessenes Volumen Harz bei einer Temperatur von 20°C bis zum Auftreten einer dauernden Trübung mit Wasser titriert. Die Angabe Wasserverdünnbarkeit 1 : 0,1 besagt somit zum Beispiel, daß beim Vermischen von 1 Volumenteil Harz mit 0,1 Volumenteil Wasser eine dauernde Trübung eintritt. Wenn man ein Harz mit einer Wasserverdünnbarkeit von zum Beispiel 1 : 0,1 herstellen will, darf man jedoch nicht so lange kondensieren, bis eine Harzprobe diese Wasserverdünnbarkeit zeigt, sondern man muß die Kondensation bereits vorher durch rasche Erniedrigung der Temperatur abbrechen, weil während der Abkühlung noch eine Nachkondensation eintritt. Die Wasserverdünnbarkeit, bei der die Kondensation abzubrechen ist, kann leicht durch Vorversuche bestimmt werden.

Der pH-Wert von 8 bis 11, vorzugsweise 8,5 bis 10,5, wird durch Einsatz von geeigneten alkalisch reagierenden anorganischen oder organischen Verbindungen eingestellt. Derartige geeignete anorganische Verbindungen sind zum Beispiel Alkalihydroxide, wie Natrium-, Kalium-oder Lithiumhydroxid; Alkalicarbonate, wie Natrium-oder Kaliumcarbonat. Geeignete organische Verbindungen sind zum Beispiel Aminoalkohole, vorzugsweise tertiäre Aminoalkohole, wie z.B. Aminoethanol, 3-Aminopropanol, N-Methylaminoethanol, N-Ethylaminoethanol, N,N-Dimethylaminoethanol, N,N-Diethylaminoethanol, N,N-Dipropylaminoethanol, N,N-Dimethyl-, -diethyl-oder -dipropylaminopropanol. Auch Mischungen verschiedener geeigneter alkalisch reagierender Verbindungen können eingesetzt werden, wie zum Beispiel ein Gemisch aus Alkalihydroxyd oder Alkalikarbonat wie z.B. KOH oder Kaliumcarbonat und N,N-Dimethylaminoethanol. Die zur Einstellung des pH-Wertes benutzten Verbindungen können dem Reaktionsansatz selbstverständlich auch in Form einer wäßrigen Lösung zugesetzt werden. Zur Einstellung des pH-Wertes sind normalerweise zum Beispiel von den Alkalihydroxiden ca. 0,06 bis 0,1 Gew.% und den tertiären Aminoalkoholen ca. 0,5 bis 2 Gew.%, bezogen auf das Gewicht des Melamins, erforderlich. Erfindungsgemäße Harze, die in Gegenwart von Aminoalkoholen kondensiert worden sind, zeigen auch nach Zusatz der üblichen Mengen latenter Härter bei Raumtemperatur noch eine gute Lagerfähigkeit.

Die nach der vorliegenden Erfindung herstellbaren Harze können auch zusätzlich modifiziert werden. Die Modifizierung geschieht wie bei der Herstellung anderer modifizierter Harze dadurch, daß bis zu etwa 3 Gew.%, bezogen auf Gesamtfestkörper, an sich bekannter Modifizierungsmittel vor, während oder nach beendeter Kondensation zugesetzt werden. Geeignete Modifizierungsmittel sind beispielsweise: Carbonsäureamide wie Acetamid, Propionamid, Benzamid; Sulfonamide wie Benzolsulfonamid, p-Toluolsulfonamid und deren gegebenenfalls veretherte Methylolderivate; Glykole wie Ethylenglykol, Propylenglykol-1,2 und Propylenglykol-1,3, Butandiol-1,2, -1,3 und -1,4, Ethylenglykol, Ethylentriglykol, Ethylentetraglykol, Dipropylenglykol, Tripropylenglykol, Tetrapropylenglykol, Polyglykole, ferner Polyglyzerin, Trimethylolpropan, Pentaerythrit; Sorbit, Zucker wie Glucose; Glykolether wie Propylenglykolmonoethylether, Dipropylenglykolmonoethylether, Tripropylenglykolmono-methyl-oder -ethylether; ferner Alkohole wie Methanol, Ethanol; Lactame, wie Epsilon-Caprolactam; Methylenbisformamid; Umsetzungsprodukt aus Formaldehyd, Formamid und Epsilon-Caprolactam.

Aus der Reihe der Diglykole hat sich insbesondere der Di-(2-hydroxypent-1-yl)-ether

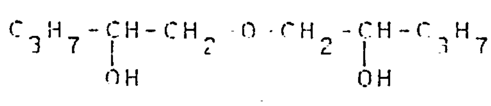

als vorteilhaft erwiesen, wenn er in Mengen von 0,2 bis 3,0 %, bezogen auf die Gesamtfeststoffmenge des Harzes, von Anfang an mitkondensiert wird.

Als Modifizierungsmittel können auch andere Aminoplastbildner und ihre Derivate, zum Beispiel Harnstoff, Thioharnstoff, Propylenharnstoff, Ethylenharnstoff, Glyoxalharnstoff, Formoguanamin, Acetoguanamin, Benzoguanamin, Adipo-bisguanamin etc. verwendet werden.

Bezogen auf das Gesamtgewicht des eingesetzten Melamins und Formaldehyds (Formaldehyd 100%ig gerechnet) werden 0 bis 15 Gew.%, vorzugsweise 0 bis 8 Gew.%, Modifizierungsmittel verwendet. Die erfindungsgemäßen, einkondensierten Hydroxyethylaminotriazine der Formel I werden bei der Berechnung des Gehalts an Modifizierungsmitteln in der Weise berücksichtigt, daß der Gewichtsanteil des Aminotriazins im Molekül als Melamin, der der Hydroxyethylgruppen als Modifizierungsmittel gerechnet wird. Auch bei der Berechnung des Melamin/Formaldehyd-Molverhältnisses wird das Melaminäquivalent des erfindungsgemäß eingesetzten Hydroxyethylaminotriazins dem Melamin zugezählt.

$$\text{Melaminäquivalent} = \frac{\text{Gewichtsmenge I} \cdot 126}{\text{Mittleres Molgewicht I}}$$

Werden Amidosulfosäure oder ihre Salze zur Modifizierung verwendet, dann kommen hiervon höchstens 1 Gew.%, vorzugsweise höchstens 0,5 Gew.%, bezogen auf das Gesamtgewicht Melamin + Formaldehyd (100%ig) zum Einsatz. Bei den maximal zur Anwendung kommenden Mengen an Modifizierungsmitteln ist auch bei Verwendung von Alkoholen, Glykolen oder Glykolethern sichergestellt, daß noch praktisch unveretherte Harze erhalten werden. Die nach der vorliegenden Erfindung herstellbaren flüssigen Harze können in an sich bekannter Weise durch Trocknung, z.B. durch Sprühtrocknung, in pulverförmige Harze überführt werden. Die Anwendung der erfindungsgemäßen Harze erfolgt vorzugsweise in Pulverform.

Das erfindungsgemäße Verfahren zur Herstellung der Harze garantiert durch die Vornahme der Kondensation in einem geschlossenen System absolute Umweltfreundlichkeit. Insbesondere beim Arbeiten bei zwei Temperaturen sind ausgesprochen kurze Reaktionszeiten zu erreichen: Nach Erreichen der Reaktionstemperatur verläuft die Kondensation innerhalb von ca. 20 bis 50 Minuten. Durch die dadurch bedingte Reduzierung der Belegzeiten der Reaktionsgefäße und des Verbrauchs an Heizenergie tritt eine Verbilligung der Herstellkosten ein.

Die erfindungsgemäßen Harze sind auch bei der Weiterverarbeitung geruchsarm und damit bei ihrer Handhabung und Verwendung umweltfreundlich und eignen sich für alle Einsatzzwecke, für die bisher Melaminharze verwendet wurden. Besonders sind sie sowohl in flüssiger als auch vorzugsweise in fester Form zur Herstellung von Formmassen geeignet.

Die Herstellung der Formmassen erfolgt in an sich bekannter Weise dadurch, daß die Harze in flüssiger oder vorzugsweise in fester Form mit Füllstoffen, Gleitmitteln und gegebenenfalls Fließhilfsmitteln und Pigmenten gemischt werden und durch Einwirkung von Wärme ein bestimmter Kondensationsgrad eingestellt wird. Geeignete Füllstoffe sind beispielsweise Holzmehl, Cellulosepulver, Celluloseesterpulver, Gesteinsmehl, Glasmehl, Baumwollflocken, Baumwollfasern, Baumwollgewebeschnitzel, Mehl, Stärke, Torf, Asbestfasern, Glimmer oder Graphit, wovon die beiden erstgenannten bevorzugt sind. Pigmente können organisch oder anorganisch sein. Geeignete anorganische Pigmente basieren im allgemeinen auf Sulfiden, Oxiden oder Mischoxiden von Metallen, insbesondere von Titan, Zink, Eisen, Chrom,, Kobalt, Blei und Cadmium. Ein bevorzugtes - schwarzes Pigment ist Ruß. Als organische Pigmente kommen die im Colourindex als Pigment Dyes gekennzeichneten Verbindungen in Betracht.

Bekannte Fließhilfsmittel sind Sorbit, Glykole und Glykolderivate und Polyglykole. Als Gleit-oder Trennmittel, die für die einwandfreie Ablösung des Formkörpers von der Preßform erforderlich sind, werden Metallstearate, vorzugsweise Zink-, Calcium-und Magnesiumstearat, eingesetzt.

Das Mischen der erfindungsgemäßen Melamin-Formaldehyd-Harze mit dem Füllmaterial und gegebenenfalls den weiteren Zusatzstoffen erfolgt in an sich bekannter Weise, im allgemeinen nach dem sogenannten Trockenverfahren oder dem sogenannten Naßverfahren. Bei dem Trockenverfahren (auch Schmelzimprägnierverfahren genannt) werden normalerweise ca. 35 bis 60 Gewichtsteile des pulverförmigen Harzes mit ca. 65

bis 40 Gewichtsteilen der Füllstoffe sowie ca. 1 Gewichtsteil Gleitmittel, ferner gegebenenfalls Fließhilfsmittel und Pigmente in einem Mischaggregat gemischt. Die erhaltene Mischung wird anschließend auf einem Walzenmischer bei Temperaturen der sogenannten Fellwalze von ca. 100 bis 140°C und der zweiten Kalanderwalze von ca. 70 bis 100°C zu einem Walzfell kalandriert.

Während der Kalandrierung erfolgt eine homogene Imprägnierung der Füllstoffe mit dem aufschmelzenden Harz, wobei gleichzeitig der Kondensationsgrad der entstehenden Formmasse ansteigt. Die Umwandlung der Rohmischung in die Formmasse dauert normalerweise ca. 1 bis 3 Minuten. Nach Erreichen des gewünschten Kondensationsgrades wird die homogene plastische Masse von der Fellwalze abgestreift, abgekühlt und anschließend zerkleinert, z.B. granuliert und gemahlen.

Zur Herstellung von Formmassen nach dem Naßverfahren werden die Pulverharze zunächst in Wasser gelöst, oder die flüssigen Harze werden direkt eingesetzt. Der Festkörpergehalt der Harzlösungen liegt in der Regel bei 50 -70 %. Es wird zunächst aus der Harzlösung, den Füll-und den anderen Zusatzstoffen eine wäßrige Rohmischung hergestellt. Die anzuwendende Rezeptur -(bezogen auf Festharz) entspricht der für das Trockenverfahren angegebenen Rezeptur. Die wäßrige Rohmischung wird zum Beispiel mittels einer Mischschnecke in ein Feuchtgranulat überführt, das dann bei Temperaturen von ca. 50 bis 100°C auf eine Restfeuchte von ca. 2 bis 6 % entwässert wird. Dabei erfolgt gleichzeitig die Einstellung des gewünschten Kondensationsgrades.

Aus den Formmassen können durch Verformung und Einwirkung von Temperaturen von ca. 100 bis 180°C und Drucken von 150 bis 800 bar, vorzugsweise 200 bis 400 bar, Formteile der verschiedensten Art hergestellt werden. Die Herstellung der Formteile erfolgt in an sich bekannter Weise zum Beispiel nach dem Formpreßverfahren, dem Spritzpreß-oder Transferpreßverfahren oder dem Spritzgießverfahren.

Beim Formpreßverfahren wird die Formmasse in granulierter oder tablettierter Form in den Hohlraum eines beheizbaren Preßwerkzeuges eingegeben. Nach Schließen des Preßwerkzeuges erfolgt bei Temperaturen von zum Beispiel 120 -170°C und Drucken von 200 bis 400 bar die Ausbildung des Formteils, das nach der Entformung noch entgratet werden muß. Bein Spritzpreß-oder Transferverfahren wird die Formmasse zunächst in einem Schneckenextruder bei erhöhtem Druck und erhöhter Temperatur vorplastifiziert und in Form eines Stranges ausgestoßen. Der Strang wird noch heiß portioniert, und die Portionen fallen sofort in geöffnete Preßwekzeuge, in denen sie bei erhöhtem Druck und erhöhter Temperatur zu Formteilen ausgeformt werden.

Bei dem Spritzgießverfahren wird die Formmasse zunächst ebenfalls in einem Schneckenextruder plastifiziert, dann jedoch über Fließkanäle in geschlossene Werkzeugformen eingespritzt, in denen bei Temperaturen von 120 bis 170°C und Drucken von 200 bis 400 bar die Endaushärtung erfolgt.

Die Preßdauer bei der Herstellung der Formteile beträgt üblicherweise ca. 30 Sekunden bis ca. 5 Minuten.

Die mit den erfindungsgemäßen Harzen hergestellten Formmassen zeigen ein hohes Fließvermögen, sind jedoch etwas weniger reaktiv als Formmassen, die aus Harzen mit höherem Formaldehydanteil hergestellt worden sind. Deshalb kann es gegebenenfalls zweckmäßig sein, bei der Herstellung der Formmassen an sich bekannte Härter zuzusetzen, um bei der späteren Aushärtung die Härtungsgeschwindigkeit zu beschleunigen, ohne daß die Schmelzviskosität wesentlich erhöht wird. Geeignete Härter sind zum Beispiel: Melaminsalze organischer Säuren, wie z.B. Melaminphthalat, Melaminoxalat, Melaminacetat, Morpholinsalz der p-Toluolsulfonsäure, Arylsulfonsäureester, wie z.B. p-Toluolsulfonsäure-methyl-, -ethyl-oder -phenyl ester, Bernsteinsäure-anhydrid, Phthalsäure-anhydrid, Maleinsäure-anhydrid, Benzoltetracarbonsäure-anhydrid, Polyphosphorsäureester oder ein Gemisch aus Ameisensäure und Wasserstoffperoxid. Die Ameisensäure ist dabei in der Regel 85%ig, das das Wasserstoffperoxid 30%ig, und das Mischungsverhältnis Ameisensäure : Wasserstoffperoxid beträgt 1 : 0,75.

Besonders geeignet sind auch Salze der Milchsäure und insbesondere Milchsäure mit einer Konzentration von über 85%, in der ein Teil in der dimeren Form

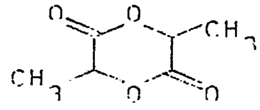

vorliegt.

Die Herstellung von dekorativ beschichteten Holzwerkstoffplatten unter Verwendung der erfindungsgemäßen Aminoplaste erfolgt in an sich bekannter Weise so, daß die Papier-bzw. Gewebebahn mit einem erfindungsgemäßen Aminoplasten getränkt und in an sich bekannter Weise weiterverarbeitet wird. Die getränkte und getrocknete Papier-bzw. Gewebebahn wird somit auf die vorbereitete Holzwerkstoffplatte unter Drucken von ca. 10 bis 100 bar bei Temperaturen von ca. 120 bis 180°C aufgepreßt.

Analog können beim Einsatz von mit Phenolharz imprägnierten Trägerbahnen anstelle der Holzwerkstoffplatten Schichtstoffe hergestellt werden, wobei Preßdrucke von ca. 50 bis 150 bar und Temperaturen von ca. 120 bis 180°C zur Anwendung kommen. Hinweise auf die Herstellung beschichteter Holzwerkstoffplatten und von Schichtstoffen finden sich in J.P. Blais loc. cit., Seiten 122 -138; C.P. Vale, loc. cit., Seiten 209 -214, und Ullmann, loc. cit., Seiten 417 -418.

Die unter Verwendung erfindungsgemäßer Aminoplaste hergestellten Schichtstoffe und vorzugsweise die beschichteten Holzwerkstoffe zeigen, auch bei Herstellung nach dem Kurztaktverfahren, einen sehr hohen gleichmäßigen Glanz, einwandfreie Aushärtung und hohe Elastizität und erfüllen auch die übrigen an eine einwandfreie Oberfläche gestellten Forderungen. Die erfindungsgemäßen Aminoplaste sind lagerbeständig, d.h. die hervorragenden, bei der Verarbeitung der Aminoplaste auftretenden Ergebnisse werden während der gesamten Lebenszeit des Harzes erzielt.

Die erfindungsgemäßen Aminoplaste eignen sich insbesondere als Kurztaktharze und sind darüber hinaus auch gegenüber Überhärtungen, wie sie in der Praxis z.B. durch verlängerte Pressentstandzeiten, erhöhte Preßtemperaturen und/oder erhöhte Härtermenge vorkommen können, weitgehend unempfindlich, und sie spalten bei der Verarbeitung nur geringe Mengen von Formaldehyd ab.

Die erreichte hohe Oberflächenelastizität der mit den erfindungsgemäßen Aminoplasten hergestellten Schichtstoffe und beschichteten Holzwerkstoffe ist z.B. dafür verantwortlich, daß bei der Prüfung auf Rißanfälligkeit gemäß DIN 53 799 von Mai 1975, Ziffer 4.7.1 (Schichtstoffe), bzw. 4.7.3. - (beschichtete Holzwerkstoffe), wobei die Proben 20 Stunden lang bei 80°C gelagert werden, keine Risse auftreten. (Diese Bestimmung der Rißanfälligkeit wird nachstehend Temperung bzw. Temperprüfung genannt). Selbst bei einer Erhöhung der Temperatur auf 100°C treten in den meisten Fällen noch keine Risse auf.

Die erfindungsgemäß als Modifizerungsmittel für das Melaminharz einzusetzenden Hydroxyethylaminotriazine und ihre Herstellung sind bekannt. So beschreibt die US-PS 2,228,161 die Umsetzung von Melamin mit Aminsalzen, vornehmlich Hydrochloriden, bei 150 bis 200°C. Die US-PS 2,393,755 lehrt die Umsetzung von Melamin bzw. Alkylmelaminen mit aromatischen Hydroxyamino-Verbindungen, gegebenenfalls in einem inerten Lösungmittel, bei Temperaturen über 150°C. Nach diesem Verfahren werden Hydroxyarylaminotriazine erhalten. Andere Druckschriften, wie beispielsweise die US-PS 3,812,122, betreffen die direkte Oxalkylierung von Melamin unter Einsatz von Alkylenoxiden bei 90 bis 200°C in Gegenwart basischer Katalysatoren, gegebenenfalls in Lösungsmitteln wie z.B. in N-Dialkylsäureamiden. Diese Verfahren führen jedoch leicht zu Polyoxiethylenverbindungen mit langkettigen Alkylether-Resten. Die erhaltenen Produkte sind zumindest mit solchen Polyether-Melaminen verunreinigt. Auch die Umsetzung von Aminotriazinen, speziell von Melamin, mit β-Aminoethanol ist bereits beschrieben worden. Aus der US-PS 4,312,988 geht jedoch hervor, daß nach dem herkömmlichen Umsetzungsverfahren, bei dem das Aminotriazin mit dem Aminoethanol in Gegenwart von starken anorganischen Säuren als Katalysator umgesetzt wird, leicht und im hohen Ausmaß eine Sekundärreaktion erfolgt, bei der unter Wasseraustritt aus der tautomeren Form des Hydroxyethylmelamins Ringschluß unter Bildung von ankondensierten Kernen eintritt. In der genantenn US-PS 4,312,988 wird daher vorgeschlagen, zur Vermeidung dieses Ringschlusses anstelle von Aminoethanol den 2-Aminoisopropanol als Ausgangsmaterial einzusetzen. Durch diese Maßnahme wird der cyclisierte Anteil im Endeffekt von ca. 50% auf ca. 40% herabgesetzt. Selbstverständlich können nach diesem Verfahren keine Hydroxyethylaminotriazine hergestellt werden.

Für die Durchführung des erfindungsgemäßen Verfahrens, d.h. die Herstellung der erfindungsgemäß modifizierten Melaminharze, war es daher zunächst erforderlich, ein Verfahren bereitzustellen, nach dem Hydroethylaminotriazine in guter Ausbeute und guter Reinheit, insbesondere unter Vermeidung der störenden Cyklisierungsreaktion, hergestellt werden können.

Es wurde nun gefunden, daß die Herstellung von Hydroxyethylaminotriazinen der Formel I

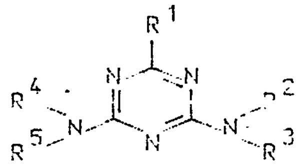

(I)

worin

$R^1$ Alkyl mit 1 bis 4 C-Atomen, Aryl mit 6 bis 10 C-Atomen oder eine Gruppe der Formel

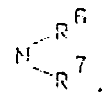

$R^2$, $R^4$ und $R^6$ unabhängig voneinander Wasserstoff, β-Hydroxyethyl oder Alkyl mit 1 bis 4 C-Atomen,

$R^3$ und $R^7$ Wasserstoff oder β-Hydroxyethyl,

$R^5$ β-Hydroxyethyl bedeuten oder

$R^2$ und $R^3$ und/oder $R^4$ und $R^5$ und/oder $R^6$ und $R^7$ gemeinsam die zweiwertige Gruppe der Formel

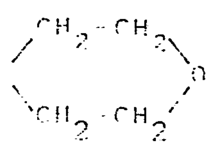

bilden und von deren Gemischen durch Umsetzung eines Aminotriazins mit einem Amin bei erhöhter Temperatur in Gegenwart eines Katalysators in der erforderlichen Qualität dann gelingt, wenn man ein Aminotriazin der Formel II

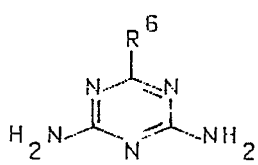

(II)

worin $R^6$ Alkyl mit 1 bis 4 C-Atomen, Aryl mit 6 bis 10 C-Atomen oder $-NH_2$ bedeutet, bei Temperaturen von 150 -250°C mit Aminen der Formel III

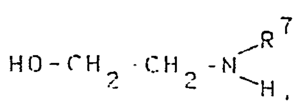

(III)

worin R' Wasserstoff, β-Hydroxyethyl oder Alkyl mit 1 bis 4 C-Atomen bedeutet und/oder mit Morpholin umsetzt und dabei als Katalysator Amidosulfonsäure und/oder Jod einsetzt.

Vorzugsweise werden als Aminotriazin der Formel II Acetoguanamin, Benzoguanamin und insbesondere Melamin eingesetzt. Bei der Umsetzung der Aminotriazine mit Aminen der Formel III bzw. Morpholin wird Ammoniak aus dem Aminotriazin abgespalten. Der Fortschritt der Umsetzung läßt sich daher durch quantitative Bestimmung, z.B. durch Titration, des abgespaltenen Ammoniaks leicht verfolgen. Das Amin -vorzugsweise wird ein Amin der Formel III eingesetzt -kann in stöchiometrischer Menge oder aber in einem Überschuß angewendet werden. Im Interesse einer möglichst ökonomischen Verfahrensführung ist es zweckmäßig, einen Aminüberschüß einzusetzen. Mit fortschreitender Reaktionszeit werden die Aminogruppen des Aminotriazins nacheinander durch das Amin der Formel III bzw. Morpholin ersetzt, wobei die Auflösung des eingesetzten Aminotriazins im Ansatz anzeigt, daß praktisch das gesamte eingesetzte Aminotriazin mindestens mit einem Mol des Amins der Formel III bzw. Morpholin reagiert hat. Bei der bevorzugten Verwendung eines Aminüberschusses entstehen in der Regel bei der Reaktion Gemische von Hydroxyethylaminotriazinen der Formel I, in denen je nach Reaktionszeit 1:1 oder 1:2 überwiegen, daneben aber auch stets höher kondensierte Produkte, d.h. solche mit einem höheren Anteil von Hydroxyethylgruppen enthalten sind. Wie bereits ausgeführt, kann anhand des austretenden Ammoniaks die Reaktion verfolgt und dann abgebrochen werden, wenn im statistischen Mittel die gewünschte Anzahl von Hydroxyethylgruppen in das Aminotriazin eingeführt worden ist. Die Reaktion kann ohne oder in einem inerten organischen Lösungsmittel ausgeführt werden. Besonders vorteilhaft ist die Verwendung von mindestens 3 Mol oder eines noch größeren Überschusses des Amins der Formel III bzw. von Morpholin von bis zu 10 Mol pro Mol Aminotriazin, wobei der Aminüberschuß dann gleichzeitig als Lösungsmittel für die Reaktion wirkt. Nach Erreichen des gewünschten Umsetzungsgrades wird die Reaktion durch Abkühlen des Ansatzes unterbrochen und das Lösungsmittel bzw. der Überschuß von Amin der Formel III bzw. Morpholin, vorzugsweise im Vakuum, abdestilliert.

Selbstverständlich können neben dieser betrieblich besonders vorteilhaften Aufarbeitungsweise auch andere Methoden der Aufarbeitung des Reaktionsansatzes durchgeführt werden.

Beispiel für Amine der Formel III sind: β-Hydroxyethylamin, Bis-(β-hydroxyethyl)-amin, β-Hydroxyethylmethylamin, β-Hydroxyethylethylamin, β-Hydroxyethylpropylamin, β-Hydroxyethylbutylamin, Morpholin. Die Amine der Formel III und/oder Morpholin können als Einzelstubstanzen oder auch im Gemisch miteinander eingesetzt werden. Bevorzugt für die Herstellung des erfindungsgemäß einzusetzenden Modifizierungsmittels sind Amine der Formel III, in denen R' Wasserstoff oder β-Hydroxyethyl ist, besonders bevorzugt ist β-Hydroxyethylamin.

Die Kondensation der Aminotriazine der Formel II mit den Aminen der Formel III bzw. Morpholin wird beschleunigt durch die Gegenwart katalytischer Mengen von Aminosulfonsäure und/oder von Jod. Zweckmäßigerweise werden pro 100 g umzusetzendes Aminotriazin 0,2 bis 15 g, vorzugsweise 0,5 bis 10 g, Aminosulfonsäure bzw. 0,05 bis 1 g, vorzugsweise 0,1 bis 0,5 g, Jod dem Ansatz zugefügt.

Weder Amidosulfonsäure noch die katalytische Menge von Jod stören die Funktion des erhaltenen Umsetzungsprodukts als Modifizierungsmittel der erfindungsgemäßen modifizierten Melaminharze und brauchen daher aus den Ansätzen nicht wieder entfernt zu werden. Amidosulfonsäure kann darüber hinaus auch in größerer als der katalytischen Menge, nämlich in Mengen bis zu 50 Gew.%, bezogen auf Aminotrioazin, zugefügt werden und im Reaktionsprodukt verbleiben, da sie als zusätzliches an sich bekanntes Modifizierungsmittel in die erfindungsgemäßen Melainharze eingebracht werden kann. Im Prinzip ist es möglich, bei Einsatz von stöchiometrischen Mengen des Amins der Formel III zu weitgehend einheitlichen Verbindungen der Formel I zu gelangen und diese in an sich bekannter Weise aus den Reaktionsansätzen isolieren. Die so erhaltenen Einzelverbindungen der Formel I können selbstverständlich mit gutem Effekt zur Herstellung der erfindungsgemäßen modifizierten Melaminharze eingesetzt werden. Wesentlich ökonomischer und auch vom Effekt her optimal ist die Verwendung von Gemischen der Hydroxyethylaminotriazine der Formel I, so wie sie bei der oben beschriebenen Kondensation von Aminotriazinen der Formel II mit Aminen der Formel III bzw. Morpholin erhalten werden. Je nach Ausgangsmaterial können diese Gemische Individuen enthalten, die bis zu 6 Hydroxyethylgruppen, vorzugsweise bis zu 4 β-Hydroxyethylgruppen, enthalten. Im Mittel enthalten die Gemische 1 bis 4 Hydroxyethylgruppen, vorzugsweise 1,5 bis 2,5 Hydroxyethylgruppen, pro Mol Aminotriazin, die sich statistisch auf die Einzelindividuen der Mischung verteilen. Das Maximum der Verteilung liegt je nach den Reaktionsbedingungen in bevorzugten Mischungen bei einer oder zwei Hydroxyethylgruppen pro Mol Aminotriazin.

Ein besonders wertvolles Merkmal der nach dem erfindungsgemäßen Verfahren hergestellten statistischen Gemische von Hydroxyethylaminotriazinen der Formel I besteht da rin, daß sie praktisch frei sind von Anionen anorganischer, insbesondere starker anorganischer, Säuren, so daß man bei der Verarbeitung der mit diesen statistischen Gemischen erfindungsgemäß modifizierten Melaminharze vor Störungen, wie Korrosion und/oder Belagbildung auf den Preßblechen, sicher ist.

Ein weiterer anwendungstechnischer Vorteil der nach diesem Verfahren herstellbaren statistischen Gemische von Hydroxyethylaminotriazinen besteht darin, daß die praktisch frei sind von polycyclischen Produkten.

Die Hydroxyethylaminotriazine der Formel I bzw. ihre statistischen Gemische können zur Modifizierung der Melaminharze auch in Form ihrer Vorkondensate mit Formaldehyd eingesetzt werden. Diese Vorkondensate weisen ein Molverhältnis von Triazinderivat:Formaldehyd von 1:1,05 bis 1:1,27 auf. Sie werden erhalten in an sich bekannter Weise durch Umsetzung der Aminotriazinderivate der Formel I bzw. deren erfindungsgemäßer statistischer Gemische mit Formaldehyd vorzugsweise in Form von 35-bis 45gew.%iger wäßriger Lösung bei Temperaturen von ca. 70 bis 90°C und bei einem pH-Wert von >8, vorzugsweise zwischen 9 und 11. Im Verlauf der Kondensationsreaktion gehen das Hydroxyethylaminotriazin der Formel I bzw. die entsprechenden statistischen Gemische nach kurzer Zeit in Lösung. In diesem Zustand weisen die Kondensationsprodukte eine unbegrenzte Wasserverdünnbarkeit auf und können bereits für den erfindungsgemäßen Modifizierungszweck eingesetzt werden. Es ist jedoch auch möglich, bis zu einer begrenzten Wasserverdünnbarkeit von 1:0,1 bis 1:5 weiter zu kondensieren. Die so erhaltenen Modifizierungsmittel weisen in der Regel eine leicht gelbliche Färbung auf und eignen sich daher vorzugsweise für die Herstellung von erfindungsgemäß modifizierten Melaminharzen, die zur Erzeugung nicht weißer Oberflächen oder Preßkörper verwendet werden sollen. Sie haben den Vorteil, daß sie auch den fertigen Melaminharzen in der Kälte nachträglich noch zugesetzt werden können und sich dabei einwandfrei und auf einfache Weise in die Harze einarbeiten lassen und einen auch unter Belastungen beständigen Modifizierungseffekt ergeben. Die folgenden Ausführungsbeispiele 1 bis 15 zeigen die Herstellung erfindungsgemäßer modifizerter Melaminharze. Die Ausführungsbeispiele 17 bis 27 veranschaulichen die Herstellung des erfindungsgemäß einzusetzenden Modifizierungsmittels und die anwendungstechnischen Beispiel 28 und 29 veranschaulichen die vorteilhafte Verwendung der erfindungsgemäßen modifizierten Melaminharze. Alle Beispiele können im Rahmen der vorstehenden Erfindungsbeschreibung und nach Maßgabe des Standes der Technik variiert werden Prozentangaben sind Gewichtsprozente und beziehen sich, wenn nichts näheres angegeben ist, stets auf den Festkörpergehalt vorliegender Lösungen.

Bei den Angaben zum Molverhältnis Melamin : Formaldehyd (M/F) bezieht sich die erste Zahl auf das Verhältnis von reinem Melamin : Formaldehyd, die zweite Zahl auf Melamin + Melaminäquivalent des Melaminderivats : Formaldehyd. Zur Bestimmung des Einbrennwertes werden 2 g der Harzlösung in einem Aluminiumschälchen mit 7,5 cm Durchmesser 60 Minuten auf 120°C erwärmt.Die allgemeine Durchführung der Kondensation ist in Beispiel 1 beschrieben. In den folgenden Beispielen sind hiervon abweichende Bedeutungen angegeben.

In den Beispielen werden folgende Abkürzungen gebraucht:

EW: Einbrennwert

DIN(4): Auslaufzeit bei 23°C aus einem Auslaufbecher 4mm gemäß DIN 53211

$V_{H_2O}$ : Wasserverdünnbarkeit bei 20°C

EP: Erweichungspunkt in °C, bestimmt auf der Kofler-Bank

$V_{DMF}$: Verdünnbarkeit mit Dimethylformamid bei 20°C. Diese Verdünnbarkeit wird wie die Wasserverdünnbarkeit unter Verwendung von Dimethylformamid anstelle von Wasser bestimmt.

Beispiel 1:

1327 g wäßriger Formaldehyd 39%ig, 25 g Dimethylaminoethanol, 3 ml wäßrige Kalilauge 10%ig, 50 g Triglykol, 100 g des gemäß Beispiel 24 hergestellten Modifizierungsmittels, 1726 g Melamin (Molverhältnis M/F = 1:1,26) und 1260 g Wasser werden in einem geschlossenen VA-Gefäß unter Rühren innerhalb von 20 min auf 120°C geheizt und, sobald der Ansatz klar ist, was nach ca. 5 min der Fall ist, auf 90°C abgekühlt und ca. 2 ½ h bei dieser Temperatur bis zu einer Wasserverdünnbarkeit von 1:0,7 weiterkondensiert.

Das Harz hat folgende Daten:

EW 54% ... DIN(4): 13 sec

pH 10,5 ... $V_{H_2O}$ 1:0,7

Nach dem Auftrocknen hat das Pulver einen Erweichungspunkt von 112°C.

Beispiel 2:

1053 g wäßriger Formaldehyd 39%ig, 20 g Dimethylaminoethanol, 2,5 ml wäßrige Kalilauge 10%ig, 40 g Triglykol, 60 g Dihydroxyethylacetoguanamin vom Schmelzpunkt 143°C, hergestellt gemäß Beispiel 20, 1370 g Melamin und 1000 g Wasser werden analog Beispiel 1 kondensiert. (Im Verlauf von ½ h auf 120°C, 5 min 120°C bis klar gelöst, 1½ h 85°C). Die Wasserverdünnbarkeit liegt dann bei 1 : 0,6. Das Molverhältnis M/F beträgt $1:1,26/_{1,23}$.

Das flüssige Harz hat folgende Kenndaten:

EW 52,6% ... DIN(4): 14 sec

pH 10,3 ... $V_{H_2O}$1:0,6

Das nach dem Auftrocknen erhaltene Pulver hat einem Erweichungspunkt von 110°C.

Beispiel 3:

2262 g wäßriger Formaldehyd 39%ig, 42,5 g Dimethylaminoethanol, 2,5 ml wäßrige Kalilauge 10%ig, 85 g Butyldiglykol, 390 g des Modifizierungsmittels hergestellt gemäß Beispiel 23, 45%ig, in Wasser (=175,5 g fest), 3090 g Melamin und 2150 g Wasser werden analog Beispiel 1 kondensiert. (Im Verlauf von 20 Minuten auf 122°C, 5 min 122°C, 1¾ h 85°C) bis zur

$V_{H_2O}$ = 1:0,4.

Das Molverhältnis des Harzes beträgt $1:1,20/_{1,16}$.

Das flüssige Harz hat folgende Daten:

EW 51,6% ... DIN(4): 14 sec

pH 10,3 ... $V_{H_2O}$ 1:0,4

Der Erweichungspunkt des daraus hergestellten Pulvers ist 120°C.

Beispiel 4:

2262 g wäßriger Formaldehyd 39%ig, 20 g Dimethylaminoethanol, 2,5 ml wäßrige Kalilauge 10%ig, 85 g eines Kondensationsproduktes aus Toluolsulfonamid, Formaldehyd und Diethylenglykol, 390 g des erfindungesgemäßen Modifizierungsmittels des Beispiels 23, 45%ig, in Wasser ~175,5 g 100%ig), 3090 g Melamin und 2150 g Wasser werden analog Beispiel 1 kondensiert, (5 min 120°C, 1 h 85°C). Das Molverhältnis des Harzes ist $1:1,20/_{1,16}$; es hat folgende Daten:

EW 52,3% ... DIN(4): 14 sec

pH 10,4 ... $V_{H_2O}$ 1:0,6 ... EP(Pulver): 118°C

Das oben eingesetzte Kondensationsprodukt aus Toluolsulfonamid, Formaldehyd und Diethylenglykol wird wie folgt hergestellt:

In einem 5-Liter-Dreihalskolben mit Rührer, Thermometer und absteigendem Kühler werden 2,17 l Diethylenglycol, 1965 g Toluolsulfonamid (technisch), 690 g Paraformaldehyd (90%ig, ® Granuform) und 22 g Kaliumhydrogensulfat im Verlauf von 30 Minuten unter Rühren auf 90°C erwärmt, und so lange bei dieser Temperatur gehalten, bis eine klare Lösung entsteht.

Der Ansatz wird nun bei 140°C gerührt und das bei der Kondensation entstehende Wasser zunächst 12 Stunden offen, dann noch 12 Stunden im Wasserstrahlvakuum (15 mbar) abdestilliert. Danach ist die Wasserabspaltung beendet, und das Reaktionsprodukt wird auf Zimmertemperatur abgekühlt.

Man erhält 4460 g einer 94,9 gew.%igen Lösung eines erfindungsgemäßen Sulfonamidderivats, welches Sulfonamid, Formaldehyd und Diolkomponente im Molverhältnis 1:2:2 einkondensiert enthält, in Diethylenglycol.

Beispiel 5:

2352 g wäßriger Formaldehyd 39%ig, 12,5 g Dimethylaminoethanol, 2,5 ml wäßrige Kalilauge 10%ig, 490 g des erfindungsgemäßen Modifizierungsmittels des Beispiels 23, 45%ig, in Wasser (~220,5 g fest), 3090 g Melamin und 2150 g Wasser werden analog Beispiel 1 bis zu einer $V_{H_2O}$ von 1:0,3 kondensiert, (5 min 120°C, 1½ h 87°C).

Das Molverhältnis des Harzes beträgt $1:1,25/_{1:1,20}$.

Ein Teil dieses Harzes wird, wie erhalten, aufgetrocknet (EP = 122°C); je 200 g des erhaltenen Flüssigharzes werden nachträglich noch mit 2% - ($fest/_{fest}$) Caprolactam bzw. Sorbit bzw. Zucker versetzt. Dadurch wird die Haltbarkeit des Flüssigharzes um 4 Tage weiter verbessert.

Beispiel 6:

2262 g wäßriger Formaldehyd 39%ig, 12,5 g Dimethylaminoethanol, 2,5 ml wäßrige Kalilauge 10%ig, 85 g Triglykol, 390 g des erfindungsgemäßen Modifizierungsmittels des Beispiels 23, 45%ig, in Wasser (~175,5 g fest), 3090 g Melamin und 2150 g Wasser werden im Verlauf von 30 min auf 120°C erwärmt, 5 min bei 120°C und dann bei 85°C bis zu einer $V_{H_2O}$ von 1:0,4 (1 h) kondensiert.

Das Molverhältnis des Harzes ist $1:1,20/_{1,16}$.

Das aus diesem Harz erhaltene Pulver hat einem EP von 118°C.

Wird statt Triglykol die gleiche Menge Diglykol verwendet, so liegt der EP bei 124°C.

Werden dem flüssigen Harz noch 5,0 g - ($fest/_{fest}$) Dimethylformamid oder Caprolactam zugesetzt, so hat das flüssige Harz eine um weitere 5 Tage verbesserte Haltbarkeit.

Diesem Harz können auch nach der Kondensation und vor dem Trocknen 2,5 bis 5 % Zucker oder Sorbit zugesetzt werden. Dadurch sinkt der Erweichungspunkt dann bis auf 108°C.

Beispiel 7:

1370 g Wasser, 8 g Dimethylaminoethanol, 0,3 g KOH, 75 g Di-(2-hydroxypentyl)ether, 233 g des erfindungsgemäßen Modifizierungsmittels des Beispiels 23 (50%ig in Wasser = 116,5 g fest), 1920 g Melamin und 1440 g wäßriger Formaldehyd, 39%ig, werden bei 125°C kondensiert, bis eine klare Lösung entstanden ist (5 min) und dann bei 90°C bis zu einer $V_{H_2O}$ von 1:0,3 weitergerührt.

Das Molverhältnis ist $1:1,23/_{1,19}$.

EW = 52,5%, pH = 9,5, DIN(4) = 15 sec.

Der EP des Pulvers beträgt 118°C.

Beispiel 8:

2190 g Wasser, 8 g Dimethylaminoethanol, 0,3 g KOH, 50 g Di-(2-hydroxypentyl)ether, 233 g des erfindungsgemäßen Modifizierungsmittels gemäß Beispiel 23 (50%ig in Wasser = 116,5 g fest), 1920 g Melamin werden im Verlauf von 20 Minuten auf 90°C erwärmt. Dann werden 600 g Paraformaldehyd (® Granuform) eingetragen und innerhalb von 10 Minuten auf 125°C aufgeheizt. Man kondensiert bei dieser Temperatur, bis eine klare Lösung entsteht (ca. 5 -6 Minuten) und rührt dann bei 90°C weiter, bis das Harz eine $V_{H_2O}$ hat von 1:0,4.

Man erhält ein Harz mit folgenden Kenndaten:

(Molverhältnis M/F = $1:1,18/_{1,11}$).

EW 51,8% ... DIN(4): 17 sec

pH 9,6 ... $V_{H_2O}$1:0,4

Erweichungspunkt des Pulvers: 118°C.

Beispiel 9:

1456 g wäßriger Formaldehyd, 39%ig, 56 g Di-(2-hydroxypentyl)ether, 7 g Dimethylaminoethanol, 0,7 g KOH, 170 g des erfindungsgemäßen Modifizierungsmittels des Beispiels 23, 70%ig in Wasser (= 119 g fest), 1280 g Wasser und 2056 g Melamin, (Molverhältnis M/F = $1:1,16/_{1,12}$), werden wie im Beispiel 8 kondensiert.

Man erhält eine Harzlösung mit folgenden Daten:

EW 54 % ... DIN(4): 18 sec

pH 9,85 ... $V_{H_2O}$ 1:0,45

Erweichungspunkt des Pulvers: 120°C.

Werden statt 119 des Modifizierungsmittels des Beispiels 23 (fest) 110 g des Modifizierungsmittels gemäß Beispiel 21 eingesetzt, so hat das Pulver einen Erweichungspunkt von 122°C bei sonst gleichen Kenndaten.

Beispiel 10:

1472 g wäßriger Formaldehyd 39%ig, 56 g Di-(2-hydroxypentyl)ether, 14 g Dimethylaminoethanol, 14 ml wäßrige Kalilauge 10%ig, 180 g des Modifizierungsmittels gemäß Beispiel 23, 70%ig, in Wasser (126 g fest), 1278 g Wasser und 2056 g Melamin werden wie im Beispiel 8 kondensiert.

Man erhält eine Harzlösung mit folgenden Kenndaten:

EW 54,6% ... DIN(4): 16 sec

pH 10,45 ... $V_{H_2O}$ 1:1,0

EP des Pulvers = 110°C.

Das Molverhältnis M/F des Harzes beträgt $1:1,17/_{1,13}$.

Beispiel 11:

3200 g Wasser, 150 g Di-(2-hydroxypentyl)-ether, 50 g Natriumsulfamat, 40%ig, 160 g Caprolactam, 3250 g Melamin, 10 g Dimethylaminoethanol, 1,5 g KOH, 50 g des Modifizierungsmittels gemäß Beispiel 23, 70%ig, in Wasser (= 35 g fest), 40 g Triethylenglykol werden auf 90°C aufgeheizt. Bei dieser Temperatur werden 1090 g ® Granuform zugegeben, dann die Temperatur auf 120°C erhöht und so lange dabei gehalten, bis alles klar gelöst ist, (5 min). Danach wird bei 95°C bis zu einer $V_{H_2O}$ von 1:0,55 kondensiert.

Die erhaltene Harzlösung (Molverhältnis M/F = 1:1,267/$_{1,259}$) hat folgende Daten:

EW 57 % ... DIN(4): 19 sec

pH 10,25

Erweichungspunkt des Pulvers = 112°C.

Beispiel 12:

325 g wäßriger Formaldehyd 39%ig, 450 g Wasser, 100 g des Modifizierungsmittels gemäß Beispiel 23, 70%ig in Wasser (~70 g fest), 400 g Melamin, 2 ml wäßrige Kalilauge 10%ig, 1 g Dimethylaminoethanol und 0,2 g

®Emulsogen EL (handelsüblicher Emulgator) werden 45 min bei Rückfluß gekocht.

Man erhält eine Harzlösung mit folgenden Daten:

Molverhältnis M/F = 1:1,33/$_{1,21}$ ,

EW 44,4 % ... DIN(4): 13 sec

pH 9,9 ... $V_{H_2O}$ 1:0,8

Beispiel 13:

In einem 500 Liter Kessel werden unter Rühren 223 kg Wasser, 0,81 kg Dimethylaminoethanol, 0,068 kg KOH, 5,4 kg Di-(2-hydroxypentyl)ether, 25,1 kg des erfindungsgemäßen Modifizierungsmittels gemäß Beispiel 23, 45%ig in Wasser, 200 kg Melamin, 62,5 kg ® Granuform (techn. Paraformaldehyd) eingefüllt, unter Rühren auf 117°C geheizt und bei dieser Temperatur gehalten, bis klare Lösung eingetreten ist (8 min). Dann wird innerhalb von 10 min auf 88°C abgekühlt; dabei kondensiert das Harz bis zu einer $V_{H_2O}$ 1:0,3.

Der Ansatz wird nun auf Raumtemperatur abgekühlt und anschließend sprühgetrocknet.

Der Erweichungspunkt des Festharzes ist 122°C, Das Molverhältnis beträgt 1:1,18/$_{1,14}$.

Eine 50%ige Lösung des Pulvers in Wasser hat folgende Daten:

$V_{H_2O}$ = 1:0,1 ... DIN(4) = 14 sec ... pH = 9,6

$V_{DMF}$ = 1:∞ ... Dichte = 1,217.

Beispiel 14:

1215 g Wasser, 37 g Dimethylaminoethanol, 7 ml wäßrige Kalilauge 10%ig, 81 g Diethylenglykol. 160 g des gemäß Beispiel 17 hergestellten Modifizierungsmittels, 1338 g wäßriger Formaldehyd 39%ig Dichte 1,12) und 1700 g Melamin - (Molverhältnis M/F = 1:1,28 , 1:1,22) werden in einem geschlossenen VA-Gefäß unter Rühren innerhalb von 20 Minuten auf 120°C geheizt; sobald der Ansatz klar gelöst ist (ca. 5 min), wird auf 85°C abgekühlt und bei dieser Temperatur weiterkondensiert, bis eine Wasserverdünnbarkeit von 1 : 0,3 erreicht ist (ca. 1 h, 85°C). Das erhaltene Harz ist leicht gelb gefärbt und hat folgende Kenndaten:

DIN (4) : 15 sec ... $V_{H_2O}$ : 1 : 0,4

EW : 54,1 % ... pH : 9,9

$V_{H_2O}$ 1:0,4

Das Harz wird im Vakuum bei 55°C über Nacht zu einem Schaum getrocknet, der sich leicht pulverisieren läßt. Das Pulver hat einen EP von 108°C.

Beispiele 15A bis 15J:

1280 g Wasser, 1456 g wäßriger Formaldehyd 39%ig, 56 g Di-(2-hydroxypentyl)ether, 7 g Dimethylaminoethanol, 0,7 g KOH, 170 g einer 70%igen wäßrigen Lösung eines der in anschließender Tabelle aufgeführten erfindungsgemäßen Modifizierungsmittel und 2056 g Melamin werden im Verlauf von 20 Minuten auf 125°C geheizt und bei dieser Temperatur gerührt, bis eine vollständig klare Lösung entstanden ist. Dann wird sofort auf 90°C abgekühlt und dabei weitergerührt, bis die Harzlösung eine Wasserverdünnbarkeit von 1:3 bis 1:0,05 hat.

Die erhaltenen Harzlösungen haben einen EW von 54% und im übrigen die in der Tabelle angegebenen Eigenschaften:

| Beispiel | Modifiziergs. mittel gemäß Beisp. | Molverhältnis M/F=1: | $V_{H_2O}$= 1: | DIN(4) (sec) | pH |
|---|---|---|---|---|---|
| A | 18 | 1,12 | 1,3 | 15 | 9,5 |
| B | 19 | 1,12 | 1,0 | 18 | 9,4 |
| C | 22 | 1,14 | 0,5 | 18 | 9,5 |
| D | 25 | 1,12 | 1,2 | 15 | 9,4 |
| E | 26 | 1,13 | 1,0 | 13 | 9,5 |
| F | 23 | 1,12 | 3 | 10 | 9,3 |
| G | 23 | 1,12 | 0,05 | 25 | 9,2 |
| H | 23 | 1,12 | 1,5 | 15 | 9,5 |
| J | 23 | 1,12 | 0,15 | 19 | 9,3 |

Beispiel 16: (Vergleichsbeispiel gemäß DE-OS 31 04 420)

In ein verschließbares, druckfestes 20-Liter-Gefäß aus rostfreiem Stahl, versehen mit Rührer, Thermometer, Schauglas, Beleuchtung, Heiz-und Kühlvorrichtung, Sicherheitsventil 5 bar, Manometer, Einfüllstutzen und Bodenventil wurden 2577 g destilliertes Wasser, 2196 g 39% ige wäßrige Formaldehydlösung, 3000 g Melamin (Molverhältnis Melamin : Formaldehyd 1 : 1,2), 37 g N,N-Dimethylaminoethanol, 703 g Ethylpolyglycol (Mol 600) und 94 g technisches Toluolsulfonamid eingetragen. Der pH-Wertbetrug 9,2. Nach dem Verschließen des Gefäßes wurde unter Rühren auf eine Temperatur von 115°C aufgeheizt. Nach Erreichen der Kondensationstemperatur von 115 -119°C löste sich das Melamin innerhalb von 6 Minuten auf. Es wurde noch 12 Minuten bei dieser Temperatur unter Rühren weiterkondensiert, bis das Harz eine Wasserverdünnbarkeit bei 20°C von 1:0,7 erreicht hatte. Der Überdruck im Kessel betrug dabei 1,3 bis 1,6 bar. Durch Einschaltung der Kühlung wurde die Reaktion abgebrochen. Die erhaltene klare Harzlösung besaß dann eine Wasserverdünnbarkeit bei 20°C von 1 : 0,5 und einen Festkörpergehalt von ca. 54,5 %.

Ein Teil der erhaltenen Harzlösung wurde in dünner Schicht bei einer Temperatur von 50°C im Wasserstrahlvakuum getrocknet und anschließend pulverisiert.

Mit dem Harzpulver wurde gemäß DIN 7708 eine Formmasse Typ 152 unter Verwendung von 0,65 Gew.% Melaminphthalat als Härter hergestellt und geprüft. Es ergab sich eine Nachschwindung von 0,3 %, eine Schlagzähigkeit von 9,5 KJ/m², Kriechstromfestigkeit KC 600 bzw. KA 3c. Die Oberfläche des Formkörpers zeigte deutliche Glanzfleckigkeit.

Beispiel 17:

150 g (1,2 Mol) Acetoguanamin, 250 g Aminoethanol, 10 g Amidosulfosäure und 2 g Jod werden 10 h im Autoklav bei 180°C gerührt.

Die Gesamtmenge wird in 360 g Wasser aufgenommen und dann das Wasser und der Überschuß Aminoethanol im Vakuum abdestilliert.

Es hinterbleiben 265 g einer Schmelze, die sofort erstarrt (eine Probe, aus Wasser umkristallisiert, -schmilzt bei 142°C).

Bezogen auf Dihydroxyethylacetoguanamin

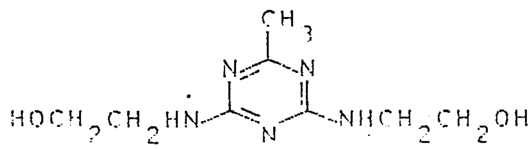

Mol 213,

ist die Ausbeute 100 %.

Beispiel 18:

1310 g Benzoguanamin, 630 g Aminoethanol und 3.8 g Jod werden bei 170 -180°C unter Rückfluß gerührt; bei 175°C setzt die $NH_3$ Abspaltung ein. Nach 24 h Rückfluß-Rühren ist mindestens 1 Mol $NH_3$ pro Mol Benzoguanamin abgespalten.

Bei ca. 100°C wird im Vakuum der Überschuß Aminoethanol abdestilliert.

Es hinterbleibt 1,65 kg eines leicht gelben Öls, das langsam kristallisiert.

| | | Gefunden | Berechnet für 1:1-Umsetzung |
|---|---|---|---|
| Analyse: | C: | 57,5 % | 57,1 |
| | H: | 5,6 % | 5,6 |
| | N: | 29,0 % | 30,3 |
| | O: | 8,6 % | 6,9 |

Das erhaltene Rohprodukt enthält etwa 20 Gew.% des 1:2-Kondensationsprodukts und ist praktisch frei von Mehrkernprodukten.

Aus Isopropanol umkristallisiert: Fp 158°C.

Beispiel 19:

126 g Melamin, 320 g Aminoethanol und 0,2 g Jod wurden 5 h im Autoklav bei 220°C gerührt. Der Überschuß des Amino ethanols und das gebildete $NH_3$ wurden im Vakuum abdestilliert. Der Rückstand (245 g) wurde in Wasser zu einer 70%igen Lösung gelöst.

Beispiel 20:

250 g Acetoguanamin, 500 ml Aminoethanol, 25 g Amidosulfosäure werden bei 180°C gerührt, bis ca. 2 Mol $NH_3$ abgespalten sind. Nach 5 h ist die Reaktion beendet.

Nach Abdestillieren von 290 ml Aminoethanol im Vakuum verbleiben 460 g Rohprodukt, die sich in 1,5 Liter heißem Wasser klar lösen.

Das Produkt besteht im wesentlichen aus 1:1-Kondensationsprodukt und ist nach der Analyse praktisch frei von Mehrkernprodukten.

Analyse der Rohprodukte:

Theorie: O = 9,5 %, berechnet für 1:1-Umsetzung,
11,4 % gefunden;
N = 41,4 % berechnet, 40,9 % gefunden.

Beispiel 21:

250 g Acetoguanamin, 320 g Diethanolamin, 2 g Amidosulfosäure und 0,5 g Jod werden bei 180°C gerührt, bis ca. 2 Mol $NH_3$ abgespalten sind. Man verfährt wie im Beispiel 3 und erhält im wesentlichen das 1:1-Kondensationsprodukt.

Beispiel 22:

400 g Melamin, 1000 g Diethanolamin, 30 g Amidosulfosäure werden bei 180 -200°C unter $N_2$ so lange gerührt, bis praktisch kein $NH_3$ mehr abgespalten wird (ca. 24 h). Dann wird der Überschuß Diethanolamin im Vakuum abdestilliert. Der Destillationsrückstand wird in 1,5 Liter Wasser heiß gelöst und von geringen unlöslichen Rest abgefiltert.

Beispiel 23:

50 g Ethanolamin, 1,66 kg Amidosulfosäure und 25 kg Melamin werden unter Rühren am Rückfluß (Innentemperatur 170 -180°C) gekocht. Innerhalb 15 h sind 2 Mol $NH_3/_{Mol\ Melamin}$ abgespalten.

Es wird auf 50°C abgekühlt und mit 17,11 Mol NaOH (1,37 kg NaOH 50%ig) unter Rühren neutralisiert. Bei 120°C/$_{20\ mbar}$ wird der Überschuß Aminoethanol unter Rühren abdestilliert (ca. 19,7 kg Destillat). Der Rückstand wird mit 46 kg Wasser unter Rühren versetzt.

Man erhält eine klare Lösung -92,6 kg -, die noch 2,9% Aminoethanol und 45,9 % Wasser enthält.

Beispiel 24:

3990 g Benzoguanamin, 5700 ml Aminoethanol, 142 g Amidosulfonsäure und 5,7 g Jod werden 24 Stunden unter Rühren zum schwachen Sieden am Rückflußkühler erwärmt. (Badtemperatur 200°C). Das abgespaltene Ammoniak wird in verdünnter Schwefelsäure absorbiert.

Nach Ablauf dieser Zeit wird der Aminoethanol-Überschuß sowie noch gelöstes Ammoniak abdestilliert und der Rückstand nach dem Erkalten pulverisiert und mit 6 Liter heißem Wasser bei 80°C 30 Minuten gerührt. Die Suspension wird abgesaugt und der Filterrückstand getrocknet.

Ausbeute: 4340 g.

Aus dem wäßrigen Filtrat kristallisieren noch weitere 216 g des Reaktionsprodukts aus.

Analyse: ($C_{11}H_{13}N_5O \bullet C_{13}H_{17}N_5O_2$)

| | C | H | N | O |
|---|---|---|---|---|
| Berechnet: | 56,9 | 5,97 | 27,65 | 9,48 |
| Gefunden: | 57,0 | 6,3 | 27,5 | 9,3 |

Beispiel 25:

600 g N-Methylethanolamin, 250 g Melamin, 10 g Amidosulfosäure und 1 g Jod werden im Autoklav 10 h auf 180 -210°C erhitzt. Dann wird abgekühlt und die ausgefallenen Kristalle abgesaugt.

Man erhält 400 g (83%) Kristalle vom Schmelzpunkt 360°C.

Berechnet für $C_9H_{18}N_6O_2$ (1:2-Kondensationsprodukt) :

O : 13,2 %, gefunden: 14,2 %.

Aus der Mutterlauge kann nach Abdestillieren des N-Methylaminoethanols weiteres, unreineres Produkt gewonnen werden.

Beispiel 26:

250 g Melamin, 450 g Morpholin und 15 g Amidosulfonsäure werden 15 Stunden bei 180°C im Autoklav gerührt. Nach dem Abkühlen wird aus dem Reaktionsprodukt der Morpholinüberschuß im Vakuum abdestilliert und der Rückstand zweimal aus Wasser unkristallisiert.

Ausbeute: 130 g.

Analyse: (1:2-Kondensationsprodukt)

$C_{11}H_{18}N_6O_2$ (Mol 266,31).

| | C | H | N | O |
|---|---|---|---|---|
| Berechnet: | 49,6 | 6,8 | 31,56 | 12,0 |
| Gefunden: | 49,9 | 6,9 | 31,3 | 11,9 |

Beispiel 27:

430 g einer 50%igen Lösung des gemäß Beispiel 23 hergestellten Hydroxyethylmelamins (215 g fest) und 40 g ®Granuform (Molverhältnis 1 : 1,20) werden 2 h am Rückflußkühler gekocht. Die erreichte Wasserverdünnbarkeit ist 1 : 2,0, der pH beträgt 10,1.

Das Produkt wird aufgetrocknet und kann als nachträgliches Modifizierungsmittel für die Herstellung erfindungsgemäßer Preßmassenharze verwendet werden (Abmischung während der Preßmassenherstellung).

Erweichungspunkt: 102°C.

Beispiel 28:

Zur Bestimmung der Wasserfestigkeit, der Nachschwindung gemäß DIN 53 464 und der Biege-und Schlagfestigkeit sowie zur Beurteilung der Oberflächengüte wurden Formmassen Typ 152 gemäß DIN 7708 hergestellt. Die Herstellung der Formmassen Typ 152 wurde nach folgender Vorschrift vorgenommen:

70 Teile Harz, 30 Teile Cellulose, 1 Teil Zinkstearat und X Teile Härter werden auf einem Walzenstuhl bei 110°C zu einem Walzfell ausgewalzt. Nach dem Granulieren des Walzfelles wird in einer Normstabform bei 150 bis 155°C, 250 bar und 8 Minuten Preßdauern ein Formkörper hergestellt. Die Härtermengen und die an den hergestellten Normstäben erhaltenen Ergebnisse sind in der Tabelle 2 zusammengestellt.

## Tabelle 2

| Harz Beispiel Nr. | Biegezugfestigkeit ($N/mm^2$) | Martenswert ($^{o}C$) | Wasseraufnahme (mg) | Nachschwindung gemäß DIN 53464 NSL in % | Schlagzähigkeit ($KJ \cdot m^{-2}$) | Oberflächenglanz |
|---|---|---|---|---|---|---|
| 1 | 82 | 134 | 40 | 0,41 | 11,9 | schleierfrei |
| 2 | 111 | 137 | 130 | 0,72 | 13,2 | schleierfrei |
| 3 | 88 | 130 | 100 | 0,37 | 15,4 | schleierfrei |
| 4 | 101 | 130 | 130 | 0,56 | 12,2 | schleierfrei |
| 5 | 94 | 140 | 110 | 0,37 | 14,5 | schleierfrei |
| 6 | 99 | 150 | 60 | 0,35 | 13,4 | schleierfrei |
| 7 | 101 | 140 | 70 | 0,24 | 12,3 | schleierfrei |
| 13 | 120 | 147 | 100 | 0,40 | 12,9 | schleierfrei |

## Ansprüche

1. Modifiziertes Melaminharz, bestehend aus einem praktisch unveretherten Melamin/Formaldehyd-Vorkondensat, Wasser und gegebenenfalls einem wassermischbaren niederen Alkanol und gegebenenfalls in wäßrigen Melaminharzen üblichen Modifizierungsmitteln, dadurch gekennzeichnet, daß das Molverhältnis von Melamin:Formaldehyd des Vorkondensats 1:1,05 bis 1:1,27 und seine Wasserverdünnbarkeit 1:3 bis 1:0,05 beträgt und daß es als Modifizierungsmittel 0,3 bis 6,5 Gew.% Hydroxyethylaminotriazine der Formel I

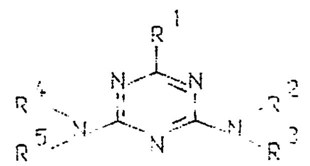

(I)

worin

$R^1$ Alkyl mit 1 bis 4 C-Atomen, Aryl mit 6 bis 10 C-Atomen oder eine Gruppe der Formel

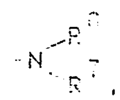

$R^2$, $R^4$ und $R^6$ unabhängig voneinander Wasserstoff,

$\beta$-Hydroxyethyl oder Alkyl mit 1 bis 4 C-Atomen,

$R^3$ und $R^7$ unabhängig voneinander Wasserstoff oder $\beta$-Hydroxyethyl,

$R^5$ $\beta$-Hydroxyethyl bedeuten oder

$R^2$ und $R^3$ und/oder $R^4$ und $R^5$ und/oder $R^6$ und $R^7$ gemeinsam die zweiwertige Gruppe der Formel

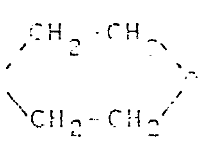

bilden, oder deren statistische Gemische in einkondensierter Form oder in Form seines Vorkondensats mit Formaldehyd im Molverhältnis von 1:1,05 bis 1:1,27 enthält.

2. Modifiziertes Melaminharz gemäß Anspruch 1, dadurch gekennzeichnet, daß das Melamin/Formaldehyd-Vorkondensat ein Molverhältnis von 1:1,15 bis 1:1,25 aufweist und/oder daß es das Modifizierungsmittel in einer Menge von 2 bis 4,5 Gew.% enthält.

3. Modifiziertes Melaminharz gemäß den Ansprüchen 1 und/oder 2, dadurch gekennzeichnet, daß es als Modifizierungsmittel eine Verbindung oder ein statistisches Gemisch von Verbindungen der Formel I enthält, worin $R^1$ Methyl, Phenyl oder vorzugsweise eine Gruppe der Formel

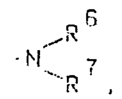

ist, und/oder $R^2$, $R^4$ und $R^6$ unabhängig voneinander $\beta$-Hydroxyethyl oder vorzugsweise Wasserstoff, bedeuten oder $R^2$ und $R^3$ und/oder $R^4$ and $R^5$ und/oder $R^6$ und $R^7$ gemeinsam die zweiwertige Gruppe der Formel

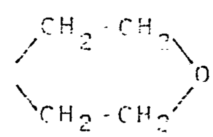

bilden.

4. Modifiziertes Melaminharz nach einem oder mehreren der Ansprüche 1 bis 3, dadurch gekennzeichnet, daß es als Modifizierungsmittel ein statistisches Gemisch von Hydroxyethylaminotriazinen der Formel I enthält, das praktisch frei ist von Anionen anorganischer Säuren und/oder einen analytischen Mittelwert von 1 bis 4, vorzugsweise 1,5 bis 2,5, hydroxyethylgruppen pro Mol Aminotriazin aufweist und/oder daß es das Modifizierungsmittel in einkondensierter Form enthält.

5. Verfahren zur Herstellung eines modifizierten Melaminharzes durch Kondensation von Melamin mit Formaldehyd in einem flüssigen Medium aus Wasser und gegebenenfalls bis zu 10 Gew.% eines wassermischbaren niederen Alkanols und gegebenenfalls in Gegenwart von in wäßrigen Melaminharzen üblichen Modifizierungsmitteln bei einem pH-Wert >8, dadurch gekennzeichnet, daß Melamin und Formaldehyd im Molverhältnis von 1:1,05 bis 1:1,27 eingesetzt werden, die Kondensation bis zu einer Wasserverdünnbarkeit von 1:3 bis 1:0,05 geführt wird und daß während oder vorzugsweise vor der Kondensation 0,3 bis 6,5 Gew. %, bezogen auf die Gewichtssumme von Melamin und Formaldehyd eines Hydroxyethylaminotriazins der Formel I des Anspruchs 1, oder vorzugsweise eines statistischen Gemisches dieser Hydroxyethylaminotriazine, oder daß während, nach oder vorzugsweise vor der Kondensation 0,3 bis 6,5 Gew.% eines Vorkondensats von Hydroxyethylaminotriazinen der Formel I oder eines Vorkondensats eines statistischen Gemisches von Hydroxyethylaminotriazinen der Formel I mit Formaldehyd im Molverhältnis 1:1,05 bis 1:1,27 zugefügt wird.

6. Verwendung des modifizierten Melaminharzes nach einem oder mehreren der Ansprüche 1 bis 4 zur Herstellung von Laminaten und Preßmassen.

7. Verfahren zur Herstellung von Hydroxyethylaminotriazinen der Formel I

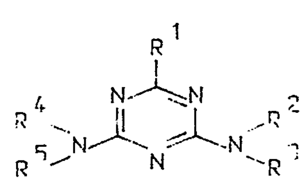

(I)

worin

$R^1$ Alkyl mit 1 bis 4 C-Atomen, Aryl mit 6 bis 10 C-Atomen oder eine Gruppe der Formel

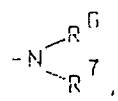

$R^2$, $R^4$ und $R^6$ unabhängig voneinander Wasserstoff, β-Hydroxyethyl oder Alkyl mit 1 bis 4 C-Atomen,

$R^3$ und $R^7$ Wasserstoff oder β-Hydroxyethyl,

$R^5$ β-Hydroxyethyl bedeuten oder

$R^2$ und $R^3$ und/oder $R^4$ und $R^5$ und/oder $R^6$ und $R^7$ gemeinsam die zweiwertige Gruppe der Formel

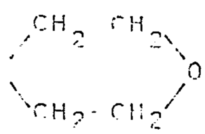

bilden und von deren Gemischen durch Umsetzung eines Aminotriazins mit einem Amin bei erhöhter Temperatur in Gegenwart eines Katalysators, dadurch gekennzeichnet, daß als Aminotriazin ein solches der Formel II

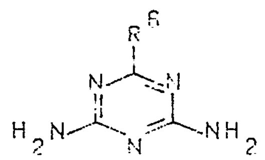

(II)

worin $R^6$ Alkyl mit 1 bis 4 C-Atomen, Aryl mit 6 bis 10 C-Atomen oder $-NH_2$ bedeutet, vorzugseise Melamin, Aceto-guanamin oder Benzoguanamin, bei Temperaturen von 150 bis 250°C, vorzugsweise 170 bis 210°C, mit einem Amin der Formel III

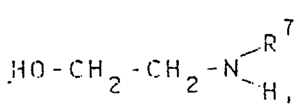

(III)

worin $R^7$ Alkyl mit 1 bis 4 C Atomen oder vorzugsweise β-Hydroxyethyl oder ganz besonders bevorzugt Wasserstoff bedeutet und/oder mit Morpholin umgesetzt und als Katalysator Amidosulfonsäure und/oder Jod eingesetzt wird.

8. Verfahren gemäß Anspruch 7, dadurch gekennzeichnet, daß das Aminotriazin der Formel II mit dem Amin der Formel III und/oder Morpholin im Molverhältnis von 1:1 bis 1:10 umgesetzt wird und/oder daß als Katalysator Amidosulfonsäure in einer Menge von 0,2 bis 15 Gew.%, bezogen auf das Aminotriazin eingesetzt wird.

9. Statistisches Gemisch von Hydroxyethylaminotriazinen der Formel I

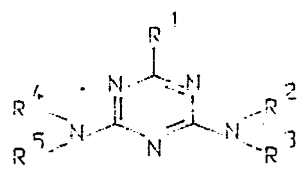

(I)

worin die Symbole R' bis $R^5$ die im Anspruch 7 angegebenen Bedeutungen haben, herstellbar nach dem Verfahren des Anspruchs 7, die praktisch frei sind von Anionen anorganischer Säuren und einen analytischen Mittelwert von 1 bis 4 Mol Hydroxyethylgruppen pro Mol Aminotriazin aufweisen.

10. Vorkondensat von Hydroxyethylaminotriazinen der Formel I

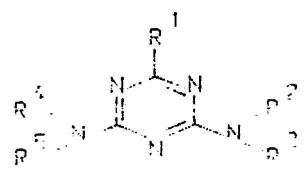

(I)

worin die Symbole R' bis $R^5$ die im Anspruch 7 angegebenen Bedeutungen haben, oder eines statistischen Gemisches derselben gemäß Anspruch 9, mit Formaldehyd im Molverhältnis Triazinderivat : Formaldehyd von 1:1,05 bis 1:1,27.

11. Verwendung von Hydroxyethyltriazinen der Formel I

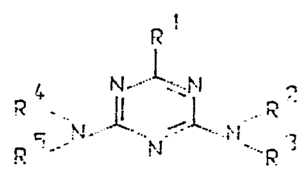

(I)

worin die Symbole R' bis $R^5$ die im Anspruch 7 angegebenen Bedeutungen haben, und von deren statistischen Gemischen gemäß Anspruch 9 sowie von deren Vorkondensaten gemäß Anspruch 10 zur Modifizierung von Melaminharzen.

12. Modifiziertes Melaminharz nach einem oder mehreren der Ansprüche 1 bis 4, dadurch gekennzeichnet, daß es ein statistisches Gemisch der Hydroxyethylaminotriazine der Formel I enthält, das herstellbar ist gemäß dem Verfahren des Anspruchs 7.

Patentansprüche für den Vertragsstaat AT

1. Verfahren zur Herstellung eines modfizierten Melaminharzes durch Kondensation von Melamin mit Formaldehyd in einem flüssigen Medium aus Wasser und gegebenenfalls bis zu 10 Gew.% eines wassermischbaren niederen Alkanols und gegebenenfalls in Gegenwart von in wäßrigen Melaminharzen üblichen Modifizierungsmitteln bei einem pH-Wert >8, dadurch gekennzeichnet, daß Melamin und Formaldehyd im Molverhältnis von 1:1,05 bis 1:1,27 eingesetzt werden und die Kondensation bis zu einer Wasserverdünnbarkeit von 1:3 bis 1:0,05 geführt wird und daß vor oder während der Kondensation als Modifizierungsmittel 0,3 bis 6,5 Gew.%, bezogen auf die Gewichtssumme vor Melamin und Formaldehyd eines Hydroxyethylaminotriazins der Formel 1 mel I

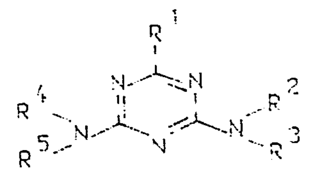

(I)

worin

$R^1$ Alkyl mit 1 bis 4 C-Atomen, Aryl mit 6 bis 10 C-Atomen oder eine Gruppe der Formel

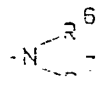

$R^2$, $R^4$ und $R^6$ unabhängig voneinander Wasserstoff, $\beta$-Hydroxyethyl oder Alkyl mit 1 bis 4 C-Atomen,

$R^3$ und $R^7$ unabhängig voneinander Wasserstoff oder $\beta$-Hydroxyethyl,

$R^5$ $\beta$-Hydroxyethyl bedeuten oder

$R^2$ und $R^3$ und/oder $R^4$ und $R^5$ und/oder $R^6$ und $R^7$ gemeinsam die zweiwertige Gruppe der Formel

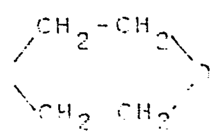

bilden oder eines statistischen Gemisches von Hydroxyethylaminotriazinen der Formel I oder daß vor, während oder nach der Kondensation 0,3 bis 6,5 Gew.% eines Vorkondensats eines Hydroxyethylaminotriazins der Formel I oder eines Vorkondensats eines statistischen Gemisches von Hydroxyethylaminotriazinen der Formel I mit Formaldehyd im Molverhältnis 1:1,05 bis 1:1,27 zugefügt wird.

2. Verfahren nach Anspruch 1, dadurch gekennzeichnet, daß Melamin und Formaldehyd im Molverhältnis 1:1,15 bis 1:1,25 eingestzt werden.

3. Verfahren nach Anspruch 1 und/oder Anspruch 2, dadurch gekennzeichnet, daß 2 bis 4,5 Gew.% Modifizierungsmittel zugesetzt werden.

4. Verfahren nach einem oder mehreren der Ansprüche 1 bis 3, dadurch gekennzeichnet, daß als Modifizierungsmittel eine Verbindung der Formel I oder ein statistisches Gemisch von Verbindungen der Formel I zugesetzt wird, worin $R^1$ Methyl, Phenyl oder vorzugsweise eine Gruppe der Formel

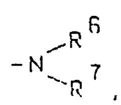

ist, und/oder $R^2$, $R^4$ und $R^6$ unabhängig voneinander $\beta$-Hydroxyethyl oder vorzugsweise Wasserstoff bedeuten oder $R^2$ und $R^3$ und/oder $R^4$ und $R^5$ und/oder $R^6$ und $R^7$ gemeinsam die zweiwertige Gruppe der Formel

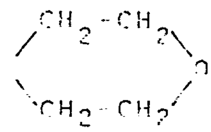

bilden.

5. Verfahren nach einem oder mehreren der Ansprüche 1 bis 4, dadurch gekennzeichnet, daß als Modifizierungsmittel ein statistisches Gemisch von Hydroxyethylaminotriazinen der Formel I eingesetzt wird, das praktisch frei ist von Anionen anorganischer Säuren und/oder einen analytischen Mittelwert von 1 bis 4, vorzugsweise 1,5 bis 2,5, Hydroxyethylgruppen pro Mol Aminotriazin aufweist.

6. Verfahren nach einem oder mehreren der Ansprüche 1 bis 5, dadurch gekennzeichnet, daß ein Hydroxyethylaminotriazin der Formel I oder ein statistisches Gemisch von Hydroxyethylaminotriazinen der Formel I vor der Kondensation zugesetzt wird.

7. Verfahren zur Herstellung von Hydroxyethylaminotriazinen der Formel I

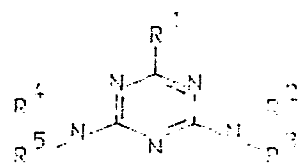

(I)

worin

$R^1$ Alkyl mit 1 bis 4 C-Atomen, Aryl mit 6 bis 10 C-Atomen oder eine Gruppe der Formel

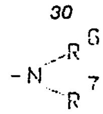 ,

$R^2$, $R^4$ und $R^6$ unabhängig voneinander Wasserstoff, $\beta$-Hydroxyethyl oder Alkyl mit 1 bis 4 C-Atomen,

$R^3$ und $R^7$ Wasserstoff oder $\beta$-Hydroxyethyl,

$R^5$ $\beta$-Hydroxyethyl bedeuten oder

$R^2$ und $R^3$ und/oder $R^4$ und $R^5$ und/oder $R^6$ und $R^7$ gemeinsam die zweiwertige Gruppe der Formel

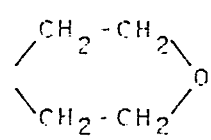

bilden und von deren Gemischen durch Umsetzung eines Aminotriazins mit einem Amin bei erhöhter Temperatur in Gegenwart eines Katalysators, dadurch gekennzeichnet, daß als Aminotriazin ein solches der Formel II

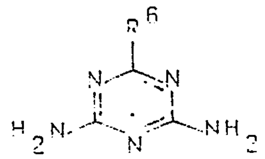

(II)

worin $R^6$ Alkyl mit 1 bis 4 C-Atomen, Aryl mit 6 bis 10 C-Atomen oder $-NH_2$ bedeutet, vorzugsweise Melamin, Acetoguanamin oder Benzoguanamin, bei Temperaturen von 150-250°C, vorzugsweise 170 bis 210°C, mit einem Amin der Formel III

Formel III

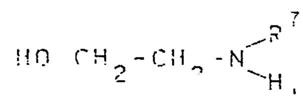

(III)

worin $R^7$ Alkyl mit 1 bis 4 C Atomen oder vorzugsweise $\beta$-Hydroxyethyl oder ganz besonders bevorzugt Wasserstoff bedeutet und/oder mit Morpholin umgesetzt und als Katalysator Amidosulfonsäure und/oder Jod eingesetzt wird.

8. Verfahren gemäß Anspruch 7, dadurch gekennzeichnet, daß das Aminotriazin der Formel II mit dem Amin der Formel III und/oder Morpholin im Molverhältnis von 1:1 bis 1:10 umgesetzt wird und/oder daß als Katalysator Amidosulfonsäure in einer Menge von 0,2 bis 15 Gew.%, bezogen auf das Aminotriazin eingesetzt wird.

9. Verfahren zur Herstellung eines Vorkondensats, dadurch gekennzeichnet, daß ein Hydroxyethylaminotriazin der Formel I

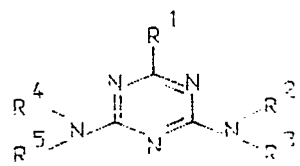

(I)

worin die Symbole $R^1$ bis $R^5$ die im Anspruch 1 angegebenen Bedeutungen haben, und/oder ein statistisches Gemisch davon, mit Formaldehyd im Molverhältnis Triazinderivat : Formaldehyd = 1:1,05 bis 1:1,27 umgesetzt wird.

10. Verwendung von Hydroxyethylaminotriazinen der Formel I

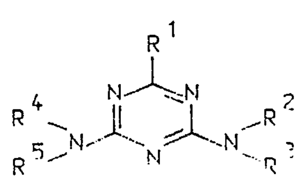

(I)

worin die Symbole $R^1$ bis $R^5$ die im Anspruch 1 angegebenen Bedeutungen haben, oder ihrer statistischen Gemische, oder ihrer Vorkondensate mit Formaldehyd im Molverhältnis Triazinderivat : Formaldehyd = 1:1,05 bis 1:1,27 zur Modifizierung von Melaminharzen.

11. Verwendung der nach einem oder mehreren der Ansprüche 1 bis 6 hergestellten modifizierten Melaminharzen zur Herstellung von Laminaten und Preßmassen.